# EUROPÄISCHE PATENTSCHRIFT

(11) **EP 4 179 007 B1**
(45) Veröffentlichungstag und Bekanntmachung des Hinweises auf die Patenterteilung: **25.03.2026**
(21) Anmeldenummer: 21748520.0
(22) Anmeldetag: 07.07.2021
(51) Int. Cl.: C08G 81/02, H01M 10/0565, C08L 53/00, C08L 71/02, C08F 8/00, C08G 65/48

(54) **VERBESSERTE SYNTHESE ZUR HERSTELLUNG GEORDNETER POLYBLOCK-COPOLYMERE MIT KONTROLLIERBARER MOLEKULARGEWICHTSVERTEILUNG**
IMPROVED SYNTHESIS FOR PRODUCING ORDERED POLYBLOCK COPOLYMERS HAVING A CONTROLLABLE MOLECULAR WEIGHT DISTRIBUTION
SYNTHÈSE AMÉLIORÉE POUR PRODUIRE DES COPOLYMÈRES À BLOCS MULTIPLES ORDONNÉS PRÉSENTANT UNE DISTRIBUTION DE MASSE MOLAIRE RÉGULABLE

(30) Priorität: 07.07.2020 DE 102020117869
(43) Veröffentlichungstag der Anmeldung: 17.05.2023
(73) Patentinhaber: Forschungszentrum Jülich GmbH, 52428 Jülich (DE)
(72) Erfinder: KRAUSE, Daniel, 48153 Münster (DE); GRÜNEBAUM, Mariano, 59394 Nordkirchen (DE); WIEMHÖFER, Hans-Dieter, 48161 Münster (DE); WINTER, Martin, 48149 Münster (DE)
(74) Vertreter: Michalski Hüttermann & Partner Patentanwälte mbB
(86) Internationale Anmeldenummer: PCT/EP2021/068887
(87) Internationale Veröffentlichungsnummer: WO 2022/008615

(56) Entgegenhaltungen:
- US-A1- 2010 252 156
- US-A1- 2020 102 451
- GUO MENGKE ET AL: "Comb-like solid polymer electrolyte based on polyethylene glycol-grafted sulfonated polyether ether ketone", ELECTROCHIMICA ACTA, vol. 255, 1 August 2006 (2006-08-01), pages 396 - 404, XP085270486, ISSN: 0013-4686, DOI: 10.1016/J.ELECTACTA.2017.10.033
- BUTSELE VAN K ET AL: "Synthesis of Novel Amphiphilic and pH-Sensitive ABC Miktoarm Star Terpolymers Synthesis of Novel Amphiphilic and pH-Sensitive ABC Miktoarm Star Terpolymers", MACROMOLECULES, AMERICAN CHEMICAL SOCIETY, US, vol. 39, no. 17, 1 January 2006 (2006-01-01), pages 5652 - 5656, XP002467587, ISSN: 0024-9297, DOI: 10.1021/MA0606859

## Beschreibung

Die vorliegende Erfindung betrifft ein Verfahren zur sequentiellen und konvergenten Herstellung geordneter Block-Copolymere mindestens aufweisend einen unpolaren und einem polaren Polymerblock, wobei der unpolare Block über eine lebende sequentielle anionische Polymerisation mittels eines Li-Organyl-Initiators mit einem pKa-Wert größer oder gleich 45 aus speziellen Monomeren aufgebaut wird und der polare Block ein Polymerblock mit einem Molekulargewicht von größer oder gleich 350 g/mol und kleiner oder gleich 5000 g/mol und aus Monomeren ausgesucht aus der Gruppe bestehend aus C2-C10 Oxacycloverbindungen, deren Derivaten oder Mischungen mindestens zweier unterschiedlicher Monomere daraus ist, wobei der polare Polymerblock ein-schrittig über eine Epoxy-Funktionalisierung eines der Monomere des polaren Blocks, erhalten über eine Reaktion dieses Monomers mit Epichlorhydrin, in einem unpolaren Lösungsmittel in Gegenwart freier Li-Ionen konvergent kovalent an das unpolare Blockanion angebunden wird. Des Weiteren betrifft die vorliegende Erfindung spezifische Block-Copolymere mit kurzen polaren Ketten sehr einheitlicher Kettenlänge, Polymerelektrolyte sowie die Verwendung der Block-Copolymere als Polymerelektrolyte in sekundären Alkali-Batterien.

Eine der Grundvoraussetzungen für den Siegeszug transportabler elektrischer Geräte bildete die Bereitstellung hinreichend großer und halbwegs anwendungssicherer Energiequellen, welche insbesondere in Form von Alkali-Sekundärbatterien zu einer ungeahnten Flexibilität und nutzbarer Anwendungsdauer unter Alltagsbedingungen beigetragen haben. Die Anwendungssicherheit ist aber auch heutzutage immer noch ein Ansatzpunkt für weitere Entwicklungen, da gerade auf Lösemittel-basierende Flüssigelektrolyte mitunter ein höheres Risiko in Bezug auf die Entflammbarkeit aufweisen. Aus diesem Grund wird intensiv an alternativen Elektrolyten geforscht, welche diese Gefahren prinzipiell nicht aufweisen.

Eine lösemittelfreie Klasse bilden die Festelektrolyte, wie beispielsweise Polymerelektrolyte, welche auf Polyethylenoxid(PEO)-Polymeren und Lithiumleitsalzen basieren und seit den 1970er Jahren erforscht werden. Diese sind anwendungstechnisch sicher und werden kommerziell als sogenannte Lithium-Polymer-Zellen gehandelt. Durch die aktuellen Entwicklungen steigt der Anteil der Polymerelektrolyt-Zellen in anspruchsvollen und energieintensiven Anwendungsfeldern wie der Elektromobilität an. Nachteilig an PEO-basierten Polymerelektrolyten ist, dass diese ohne Abstriche in der Leistungsfähigkeit im Regelfall nur bei Temperaturen oberhalb ihres Schmelzpunktes (ca. 60 °C) verwendet werden können, da erst dann die Leitfähigkeiten für Batterieanwendungen ausreichen. Auch andere mögliche Polymerelektrolyte, wie beispielsweise die Polycarbonate, lassen sich ebenfalls nur oberhalb ihrer Glasübergangstemperaturen verarbeiten und weisen selbst dann für moderne Hochleistungsbatterien eher geringe ionische Leitfähigkeiten auf. Des Weiteren kann mit diesen Polymeren die Lithiumionenteilleitfähigkeit nicht unabhängig von der mechanischen Stabilität gesteuert werden, welches elementar wichtig ist, um ein Lithiumdendritenwachstum an Lithiummetallanoden unterdrücken zu können.

Ein Ansatzpunkt zur Entkopplung der mechanischen und ionenleitenden Eigenschaften von Polymerelektrolyten wurde im Bereich des Aufbaus geordneter Mikro- und Nanostrukturen der ionenleitenden Domänen identifiziert. Durch den Einsatz von Block-Co-Polymeren (BCP) mit unterschiedlichen aber geordneten Blockdomänen, können die elektrochemischen und mechanischen Eigenschaften separat voneinander angepasst werden. Durch Interaktion der Polymersegmente der einzelnen Blockpolymere erfahren diese eine Selbstorganisation (self-assembly) und es wird ein geordnetes Netzwerk aus ionenleitenden Domänen aufgebaut, in denen eine durchgehend entkoppelte schnelle Lithiumionenleitung mit gleichzeitig hoher Überführungszahl vorliegt. Grundvoraussetzung zur Ausbildung hoch organisierter, makroskopischer Bereiche ist aber, dass die verwendeten Block-Co-Polymere hoch reproduzierbare Eigenschaften aufweisen.

Auch in der Literatur finden sich einige Ansätze zum Aufbau und den ionenleitenden Eigenschaften vom Polymerelektrolyten aus Block-Copolymeren.

So beschreibt beispielsweise Dörr et. al. in der Chem. Eur. J. 2018, 24, 8061 - 8065 (DOI: 10.1002/chem.201801521) "An Ambient Temperature Electrolyte with Superior Lithium Ion Conductivity based on a Self-Assembled Block Copolymer" mögliche Aufbauten und Eigenschaften von Block-Copolymeren in der Verwendung als Polymerelektrolyten.

Die US 2012/026 488 0 A1 offenbart die Synthese eines Block-Copolymers, welches gleichzeitig elektronische und ionische Leitung aufweist. Zur Synthese eines Block-Copolymers aus Poly(3-hexylthiophen) (P3HT) und Poly(ethylenoxid) wird eine Kombination aus Grignard-Metathesepolymerisation und Klickreaktion nacheinander angewendet.

Des Weiteren offenbart die US 771 592 2 B1 eine implantierbare medizinische Vorrichtung, welche zumindest teilweise aus einem Polymermaterial einschließlich eines Basispolymers und eines Block-Copolymers gebildet ist. Das Block-Copolymer umfasst mindestens einen Polyethylenoxid (PEO)-Block und mindestens einen Polyisobutylen(PIB)-Block. Die PEO- und PIB-Blöcke können durch eine Urethan- oder Harnstoffbindung miteinander gekoppelt sein. Das Blockcopolymer kann ein Tri-Block-Copolymer, PEO-PIB-PEO, sein, und das Basispolymer kann ein Polystyrol-Polyisobutylen-Polystyrol-Tri-Block-Copolymer sein.

In der US 2010 252 156 A1 ist ein Verfahren zur Herstellung eines Dien-Blockcopolymers in einem Schritt beschrieben, bei dem mindestens einer dieser Blöcke aus einem Polyether besteht, dessen zahlenmittleres Molekulargewicht im Wesentlichen 100 bis 5000 g/mol beträgt, und mindestens ein weiterer dieser Blöcke aus einem Dienelastomer besteht. Das Verfahren ermöglicht einen hohen Grad der Pfropfung des Polyethers auf die Polymerketten. Die vorliegende Erfindung betrifft auch eine verstärkte Kautschukzusammensetzung, insbesondere für die Herstellung von Reifen, die ein solches Blockcopolymer enthält, das dazu bestimmt ist, mit dem verstärkenden Füllstoff zusammenzuwirken. Eine Kautschukzusammensetzung weist verbesserte Hystereseeigenschaften im vulkanisierten Zustand auf, während sie zufriedenstellende Verarbeitungseigenschaften im nicht vulkanisierten Zustand beibehält.

Weitere Block-Copolymere sind beispielsweise in GUO MENGKE ET AL: "Comb-like solid polymer electrolyte based on polyethylene glycol-grafted sulfonated polyether ether ketone", ELECTROCHIMICA ACTA, Bd. 255 , Seiten 396-404, BUTSELE VAN K ET AL: "Synthesis of Novel Amphiphilic and pH-Sensitive ABC Miktoarm Star Terpolymers Synthesis of Novel Amphiphilic and pH-Sensitive ABC Miktoarm Star Terpolymers", MACROMOLECULES, AMERICAN CHEMICAL SOCIETY, US, Bd. 39, Nr. 17, 1. Januar 2006 (2006-01-01), Seiten 5652-5656, und der US 2020/102451 A1 beschrieben.

Derartige aus dem Stand der Technik bekannte Lösungen können noch weiteres Verbesserungspotential bieten, insbesondere hinsichtlich der Einfachheit, Sicherheit, Skalierbarkeit und Effizienz der Synthese sowie der Reproduzierbarkeit der über die Synthese erhältlichen Block-Copolymere.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung eine leicht hochskalierbare Syntheseroute vorzuschlagen, welche einfach und kostengünstig durchzuführen ist, hohe Ausbeuten liefert und zu geordneten Block-Co-Polymeren mit einstellbarem und definiertem Aufbau und Molekulargewicht der einzelnen Blöcke führt.

Die Lösung der Aufgabe erfolgt durch die Merkmale der jeweiligen unabhängigen Ansprüche, gerichtet auf das erfindungsgemäße Verfahren, auf Block-Copolymere erhältlich über das erfindungsgemäße Verfahren, Polymerelektrolyten aufweisend die Block-Copolymere sowie die Verwendung der derart erhältlichen Block-Copolymere als Polymerelektrolyten in sekundären Alkali-Ionenbatterien. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die Lösung der Aufgabe erfolgt erfindungsgemäß durch ein Verfahren zur sequentiellen und konvergenten Herstellung geordneter Block-Copolymere mindestens aufweisend einen unpolaren und einem polaren Polymerblock, wobei der unpolare Block über eine lebende sequentielle anionische Polymerisation mittels eines Li-Organyl-Initiators mit einem pKa-Wert größer oder gleich 45 aus Monomeren ausgesucht aus der Gruppe bestehend aus konjugierten Dienen, Styrol, Vinylsilan, Vinylnaphthalin, Vinylmetallocen, deren Derivaten oder Mischungen daraus aufgebaut wird und der polare Block ein Polymerblock mit einem Molekulargewicht von größer oder gleich 350 g/mol und kleiner oder gleich 5000 g/mol und aus Monomeren ausgesucht aus der Gruppe bestehend aus C2-C10 Oxacycloverbindungen, deren Derivaten oder Mischungen mindestens zweier unterschiedlicher Monomere daraus ist, wobei der polare Polymerblock ein-schrittig über eine Epoxy-Funktionalisierung eines der Monomere des polaren Blocks, erhalten über eine Reaktion dieses Monomers mit Epichlorhydrin, in einem unpolaren Lösungsmittel ausgesucht aus der Gruppe der aromatischen Kohlenwasserstoffe oder Mischungen daraus in Gegenwart freier Li-Ionen konvergent kovalent an das unpolare Blockanion angebunden wird.

Überraschenderweise wurde gefunden, dass über oben angegebenes Verfahren sich BCPs mit zwei oder mehr unterschiedlichen unpolaren/polaren Blöcken erhalten lassen, welche eine besonders reproduzierbare und gleichmäßige Verteilung der Kettenlängen der einzelnen Polymerblöcke aufweisen. Mittels des Verfahrens lassen sich für jeden Polymerblock innerhalb sehr enger Verteilungsgrenzen die genaue Anzahl an Monomeren festlegen und dies unabhängig von den chemischen Eigenschaften der verwendeten Monomere der einzelnen Blöcke. Der Polydispersitätsindex (PDI) des gesamten Block-Copolymers und insbesondere auch des kurzen polaren Blocks können kleiner als 1,04 sein. Es lassen sich flexibel auch ansonsten schwer zu synthetisierende Block-Copolymere erhalten, welche über die üblichen Verfahren so gar nicht oder nicht so effizient herstellbar sind. Insbesondere ist der Syntheseaufwand gering und derart lassen sich auch hoch asymmetrische BCPs darstellen, welche sich durch stark unterschiedliche Blocklängen, durch stark unterschiedliche Polaritäten oder sogar durch Unterschiede in Beiden auszeichnen. Über den verbesserten Aufbau mit gleichmäßigeren Kettenlängen des Co-Polymers insgesamt und jeweils auch für die einzelnen Blöcke, erhält man einen leichteren Zugang zu selbstorganisierten und hochstrukturierten BCPs, welche gleichzeitig sowohl gute mechanische wie auch, falls gewünscht, gesteuerte ionenleitende Eigenschaften aufweisen können. So können beispielsweise BCPs mit definiert ionenleitenden Segmenten aufgebaut werden, beispielsweise mit Polymersegmenten, welche eine entkoppelte Lithiumionenbewegung und somit schnelle Lithiumionentransporte aufweisen. Dies kann insbesondere durch sehr gleiche, und im Vergleich zu den unpolaren Blöcken, sehr kurze polare Blöcke erreicht werden, wobei die Standardverfahren zu größeren Varianzen in der Monomeranzahl der aufgebauten polaren Blöcke führen. Durch die verbesserte Gleichmäßigkeit der Monomerenzahl in den polaren Blöcken können sich mehrere Polymere zu definierten, hoch geordneten Domänen zusammenschließen, welches in einer verbesserten Alkali-Ionenleitung über die Domänen resultiert. Durch den Einsatz von BCPs aus unterschiedlichen Monomeren und Kettenlängen können Funktionalitäten gezielt separiert und einzeln für sich genommen aufoptimiert werden. Ein weiterer Vorteil ergibt sich dadurch, dass die Synthese leicht auf größere Produktionsmengen hochskalierbar und generell automatisierbar ist, da im Gegensatz zum Stand der Technik kein Lösungsmittel- oder Gegenionaustausch, keine toxischen Gase sowie zusätzliche Additive oder Katalysatoren nötig sind. Zudem kann über die erfindungsgemäße Anbindung des polaren Blocks über spezifische Funktionalisierungen ein sehr homogener polarer Block erzeugt werden, wobei die Funktionalisierung im Wesentlichen die gleichen oder ähnliche chemische Eigenschaften aufweist wie die Monomere des polaren Blocks. Dies kann zu einer besonders gleichmäßigen Struktur des polaren Blocks inklusive der Anbindung an den unpolaren Block führen.

Die Reaktionsführung kann beispielsweise über folgendes Schema veranschaulicht werden:

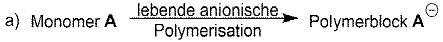

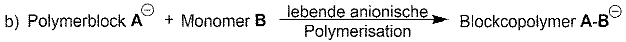

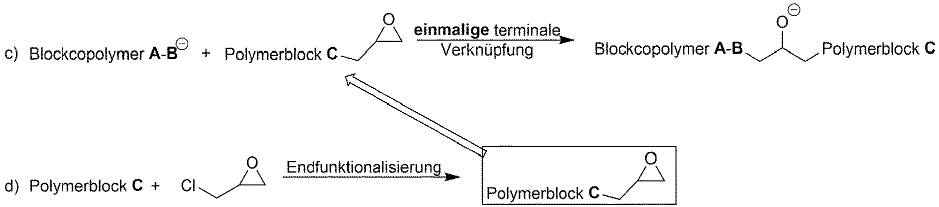

Ein oder mehrere unpolare Blöcke A und B werden über eine lebende sequentielle anionische Polymerisation aufgebaut (Schritte a) + b)). Es ist auch möglich, nur einen unpolaren Block auf diese Weise aufzubauen. An diesen unpolaren anionischen Block wird ein über eine Epoxidgruppe funktionalisierter dritter polarer Block (C) einmalig konvergent kovalent addiert (Schritt c ist der Konvergenzschritt). Die Epoxy-Funktionalisierung des polaren Blocks (C) kann beispielsweise über eine einfache Umsetzung des polaren Blocks (C) mit Epichlorhydrin erhalten werden (Schritt d). Man erhält ein negativ geladenes polar/unpolar Block-Copolymer, welches aufgrund der Assoziation von Lithium an den negativ geladenen Sauerstoff der geöffneten Epoxidgruppe keine weiteren Additionsreaktionen erlaubt. Der Block C wird also genau einmal addiert. In Abwesenheit von Lithium, bzw. wenn es nicht oder nicht ausreichend fest an das negativ geladene Sauerstoffatom koordiniert ist, können weitere Reaktionen erfolgen, welches zu deutlich unterschiedlichen Molekulargewichten der resultierenden BCPs führen kann.

Das erfindungsgemäße Verfahren kann sich insbesondere dafür eignen, dass BCPs mit unterschiedlichen polaren Blöcken oder Blocklängen aufgebaut werden. Nach dem Stand der Technik konnten bisher geordnete BCP-Systeme mit polaren, beispielsweise ionenleitenden Polymerblöcken, nur in einer nacheinander geschalteten Folge aus Polymerisationsschritten nach dem Grundprinzip der lebenden sequentiellen anionischen Polymerisation aus den jeweiligen Monomeren aufgebaut werden. In dieser Verfahrensführung müssen zwei verschiedene Polymerisationsmechanismen aufeinander folgend angewendet werden. Insbesondere der polare Block kann nur über eine lebende anionische Ringöffnungspolymerisation gebildet werden. Die unpolaren Monomere werden anionisch über die Carbanionen polymerisiert und anschließend, nach dem Austausch des Lösungsmittels und des Gegenions, wird der polare Block über die Ringöffnungspolymerisation der gebildeten Sauerstoffanionen der geöffneten Epoxidringe fortgeführt.

Um beispielsweise eine lithiumionenleitende Domäne auf Basis eines polaren PEO-Blocks während der BCP-Synthese aus dem Monomer (Ethylenoxidgas) nach dem Stand der Technik aufzubauen, ist ein aufwendiger, zweistufiger Syntheseprozess nötig:
a) 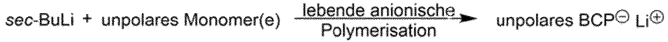
b) 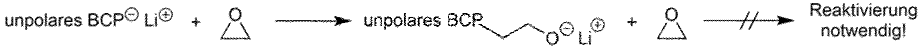
c) 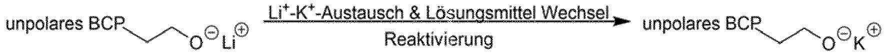
d)

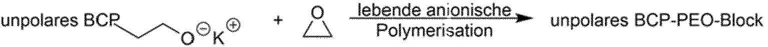

In einem ersten Schritt wird ein definierter Polymerblock über eine lebende anionische Polymerisation aus unpolaren Monomeren aufgebaut (Schritt a)). Am Ende des Schrittes liegt ein Polymeranion mit Lithium als Gegenion vor. Um an diesen anionischen Polymerblock beispielsweise polares Ethylenoxid anzubinden, bedarf es eines aufwändigen Austausches des Lithiums durch Kalium, da aufgrund der stärkeren Assoziation des Lithiums an das Anion weitere Reaktionen, beispielsweise von Ethylenoxid, ausgeschlossen sind (Schritt b und Schritt c). Erst nach Kationenaustausch und Austausch des Lösungsmittels kann Ethylenoxid über eine weitere, lebende (Ringöffnungs)Polymerisation an das Blockpolymer-Anion angebunden werden (Schritt d)). So wird der definierte Aufbau von polaren auf unpolaren Blöcken, beispielsweise zur Herstellung ionenleitender Di-, Tri-Block und höherer Multi-BCPs, umständlich und teuer. Dies im Gegensatz zu der oben dargestellten erfindungsgemäßen Herstellung, in welcher sich BCPs für maßgeschneiderte Polymerelektrolyte synthetisieren lassen, wobei der Einsatz toxischen und hoch explosiven Ethylenoxidgases unnötig ist und der polare Block konvergent an das unpolare anionische Polymerblockende angebunden wird. Zusätzlich ist vorteilhaft, dass über das erfindungsgemäße Verfahren auch sehr kurze polare Blöcke reproduzierbar anbringbar sind.

Das erfindungsgemäße Verfahren ist ein Verfahren zur sequentiellen und konvergenten Herstellung geordneter Block-Copolymere mindestens aufweisend einen unpolaren und einem polaren Polymerblock. Innerhalb des erfindungsgemäßen Verfahrens werden Co-Polymere erhalten. Co-Polymere sind Polymere, welche aus mindestens zwei unterschiedlichen Monomereinheiten bestehen. Die unterschiedlichen Monomereinheiten sind dabei nicht willkürlich innerhalb der Polymerkette angeordnet. Die jeweiligen Monomereinheiten liegen voneinander abgegrenzt in einzelnen Bereichen der Polymerkette lokalisiert vor. Dementsprechend ergeben sich jeweils einzelne Blöcke für die unterschiedlichen Polymere. Das Zusammenfügen der Polymerkette erfolgt erfindungsgemäß sequenziell und konvergent, dies bedeutet, dass die Herstellung des BCPs nicht innerhalb eines einzelnen Herstellschrittes, sondern durch mindestens zwei verschiedene, unterschiedliche und nachgelagerte Schritte erfolgt, wobei die Herstellung allerdings als "Eintopf"-Reaktion innerhalb derselben Reaktionsumgebung durchgeführt wird. Die Anbindung erfolgt konvergent durch eine einmalige Reaktion des end-funktionalisierten Monomers des polaren Blocks. Die nachgelagerten Herstellschritte betreffen dann jeweils mindestens den Aufbau eines einzelnen Blocks des BCPs. Es ist zudem möglich, dass ein einzelner Block nicht in Summe, sondern über die Polymerisation einzelner Monomere erhalten wird. Über das Verfahren werden zudem geordnete BCP erhalten. Geordnet meint in diesem Zusammenhang, dass sich Co-Polymere ergeben, welche prinzipiell dazu in der Lage sind, zumindest ein Teil der Polymerblöcke, beispielsweise den polaren Block, in teilkristallinen oder kristallinen Strukturen auszurichten. Die Polymere sind also in der Lage untereinander, zumindest für bestimmte Teilbereiche eine definierte, geordnete Struktur auszubilden. Die geordneten Strukturen lassen sich beispielsweise über Röntgenstreumethoden nachweisen. Die Anzahl der unterschiedlichen Blöcke zur Ausbildung der BCP ist prinzipiell nicht begrenzt. Zweckmäßigerweise weisen die BCP mindestens zwei, bevorzugt mindestens drei unterschiedliche Monomereinheiten im BCP auf. Die maximale Anzahl unterschiedlicher Blöcke kann kleiner als 10, bevorzugt kleiner als 8, des Weiteren bevorzugt kleiner als 5 betragen. Die Begriffe "unpolar" und "polar" beziehen sich dabei auf die Polarität der einzelnen Monomere und dementsprechend die Polarität der daraus hergestellten Kettensegmente oder Blöcke. Polare Blöcke werden aus polaren Monomeren mit Heteroatomen im Monomer wie beispielsweise Sauerstoff oder Stickstoff erhalten. Halogene sind als Heteroatome ausgeschlossen. Unpolare Monomere oder Blöcke umfassen Monomere aus im Wesentlichen Kohlenwasserstoffen, ohne Heteroatome wie beispielsweise Bor, Sauerstoff, Stickstoff, Schwefel, Phosphor oder Halogene. Beispiele für unpolare Monomere sind konjugierte Diene, Styrole, Vinylnaphatline, Vinylmetalocene und Vinylsilane.

Der unpolare Block wird über eine lebende sequentielle anionische Polymerisation mittels eines Li-Organyl-Initiators mit einem pKa-Wert größer oder gleich 45 aus Monomeren ausgesucht aus der Gruppe bestehend aus konjugierten Dienen, Styrol, Vinylsilan, Vinylnaphthalin, Vinylmetallocen, deren Derivaten oder Mischungen daraus aufgebaut. Zum Aufbau geordneter BCPs hat es sich als besonders vorteilhaft herausgestellt, dass zumindest ein Polymerblock über eine lebende anionische Polymerisation erhalten wird. Unter einer lebenden Polymerisation versteht man Kettenpolymerisationen, in denen keine Abbruchreaktionen und Kettenübertragungen auftreten und Monomere an eine schon gebildete, anionische Kettenstruktur über einen nucleophilen Angriff der resultierenden Carbanionen addiert werden. Verschiedene Blöcke können also nur in der Reihenfolge abnehmender pKa-Werte ihrer Monomere verknüpft werden. Unter "lebenden Bedingungen" wird die Kontrolle von Molmassen mit sehr enger Verteilung möglich. Des Weiteren lassen sich unter diesen Voraussetzungen klar definierte Polymerstrukturen, wie zum Beispiel BCPs mit festgelegten Sequenzlängen, erzeugen. Eine Möglichkeit für diese Art der Verfahrensführung ist weiter hinten in den Beispielen angegeben. Der unpolare Block besteht aus unpolaren Monomeren, wobei die angegebene Gruppe an Monomeren im gesamten Blockpolymer zur Ausbildung verbesserter mechanischer Eigenschaften beitragen kann. Zudem hat sich überraschenderweise gezeigt, dass diese Monomere auch das Kristallisationsverhalten und die -Eigenschaften des weiter folgenden polaren Blocks positiv beeinflussen können. Ohne durch die Theorie gebunden zu sein scheint die über den polaren Block erreichbare Struktur durch Anlagerung mehrerer unpolarer Blöcke untereinander, auch über die eine Gerüstfunktion des unpolaren Blocks beeinfluss- und steuerbar zu sein. Insbesondere eine Kombination einer Auswahl aus der oben genannten Gruppe an unpolaren Monomeren kann im Rahmen des erfindungsgemäßen Verfahrens zu besonders geordneten BCPs führen. Die unpolaren Monomere lassen sich problemlos mittels einer lebenden anionischen Polymerisation in einen unpolaren und definierten Polymerblock überführen. Unter diesen Derivaten werden einfach oder mehrfach substituierte konjugierte Diene, Styrole, Vinylnaphatline, Vinylmetalocene und Vinylsilane verstanden, dessen Substituenten aus linearen und/oder verzweigten Alkylketten und/oder Alkoxyketten mit einer Kettenlänge von C1 bis C10 bestehen können. Konjugierte Diene können beispielsweise Butadien, Isopren oder Methylisopren sein. Unter Styrolderivaten werden Derivate wie z. B. Styrol, 4-Methylstyrol, 4-(1-Adamanthyl)-alpha-methylstyrol, 3-(Dimethyl¬iso¬propyl¬siloxyl)-styrol verstanden. Vinylmetallocene können beispielsweise Vinylferrocen, Vinylcobaltocen, Vinylmanganocen oder Vinylnickelocen sein. Mögliche Li-Organyl-Initiatoren umfassen mindestens Lithium und einen organischen Rest, wobei der organische Rest aliphatisch oder aromatisch sein kann. In dem erfindungsgemäßen Verfahren können beispielsweise folgende Li-Organyl-Initiatoren eingesetzt werden: Alkyllithium wie beispielsweise Methyllitihum, Ethyllithum, Propyllitihum, Isopropyllithium, n-Butyllithium, sec-Butyllithium, tert-Butyllithium, Pentyllithium, Isopentyllithium oder Neopentyllithium. Unter aromatischen Lithium-Organyl-Initiatoren werden beispielsweise Phenyllithium oder Napthyllithium verstanden. Die entsprechenden pKa-Werte des oder der eingesetzten Initiatoren finden sich in der Literatur.

Der polare Block ist ein Polymerblock mit einem Molekulargewicht von größer oder gleich 350 g/mol und kleiner oder gleich 5000 g/mol und besteht aus Monomeren ausgesucht aus der Gruppe bestehend aus C2-C10 Oxacycloverbindungen oder Mischungen mindestens zweier unterschiedlicher Monomere daraus. Insbesondere über das erfindungsgemäße Verfahren kann die Anbindung sehr definierter, polarer Monomer-Blöcke aus oben genannter Gruppe erfolgen. Die vorgeschlagene Synthese führt dabei zu sehr gleichmäßigen Block-Copolymeren, wobei insbesondere die Molekulargewichtsverteilung äußerst homogen ist. Dies kann insbesondere dazu führen, dass diese sehr homogene Molekulargewichtsverteilung der Blockpolymere sich zum Aufbau von Polymerelektrolyten besonders eignet. Erfindungsgemäß werden dabei keine einzelnen Monomere, sondern relativ kurze polare Ketten konvergent ein-schrittig an das unpolare Blockanion angehängt. Die C2-C10 Oxacycloverbindungen können beispielsweise Ethylen-, Propylen-, Butylenoxid usw. umfassen. Bevorzugt können insbesondere C2-C4 Oxacycloverbindungen zum Aufbau des polaren Blocks eingesetzt werden. Unter den Derivaten der C2-C10 Oxacycloverbindungen werden einfache oder mehrfache Substitutionen verstanden, wobei die Substituenten aus linearen und/oder verzweigten Alkylketten und/oder Alkoxyketten mit einer Kettenlänge von C1 bis C10 bestehen können.

Der polare Polymerblock wird ein-schrittig über eine Epoxy-Funktionalisierung eines der Monomere des polaren Blocks, erhalten über eine Reaktion dieses Monomers mit Epichlorhydrin, in einem unpolaren Lösungsmittel ausgesucht aus der Gruppe der aromatischen Kohlenwasserstoffe oder Mischungen daraus in Gegenwart freier Li-Ionen konvergent kovalent an das unpolare Blockanion angebunden. Die Anbindung des polaren Polymerblocks erfolgt über eine chemische Funktionalisierung mindestens eines der Monomere der polaren Polymerblockkette, wobei über diese Funktionalisierung dann die Anbindung an das Polymer-Anion des unpolaren Blocks erfolgt. Epichlorhydrin reagiert mit einem Monomer des polaren Blocks über das Chlorfunktionalisierte C-Atom, wobei eine Epoxidgruppe an dem polaren Block verbleibt. Dieser Epoxy-endfunktionalisierte polare Polymerblock ist in der Lage, mit dem Polymer-Anion in der Reaktionsumgebung der anionischen Polymerisation einmalig eine kovalente Bindung einzugehen. Insofern besteht der polare Polymerblock vor der Reaktion aus der polaren Kette und nur der weiteren, funktionell angebundenen Epoxy-Gruppe. Die Funktionalisierung des polaren Blocks erfolgt außerhalb der Reaktionslösung der anionischen Polymerisation. In der erfindungsgemäßen Herstellungsmethode handelt es sich um eine konvergente Synthese, es wird also nur der funktionalisierte polare Block zur anionischen Polymerisationslösung gegeben. Es wird also der funktionalisierte polare Block zur anionischen Polymerisationslösung gegeben. Je nach Auswahl der funktionellen Anbindung kann der polare Polymerblock mehr oder weniger gleichbleibende chemische und physikalische Eigenschaften aufweisen. Erfolgt die chemische Funktionalisierung mit Epichlorhydrin, werden über die resultierende Epoxy-Funktionalität ähnliche chemische Eigenschaften wie die der Monomeren des polaren Blocks erhalten. Die Anbindung des polaren Polymerblocks kann ohne große Störung des polaren Polymergefüges mit sehr homogenen Eigenschaften des funktionalisierten polaren Blocks erfolgen. Letzteres kann insbesondere zu verbesserten kristallinen Strukturen führen, wenn sich mehrere Block-Copolymere also solche oder in Teilbereichen zu geordneten Strukturen zusammenlagern. Die Umsetzung erfolgt dabei zwingend in einem unpolaren Lösemittel ausgesucht aus der Gruppe der aromatischen Kohlenwasserstoffe oder Mischungen daraus unter Gegenwart freier Lithium-Ionen. Freie Lithium-Ionen sind Ionen, welche in der Lage sind an den negativen Sauerstoff der Anbindungsstelle polar/unpolar zu koordinieren und so eine Weiterreaktion am negativ geladenen Sauerstoff zu verhindern. Nicht "freie" Lithium-Ionen liegen beispielsweise als unlösliche Lithium-Salze, beispielsweise LiF, LiCl oder an anderen Stellen des Block-Copolymers gebunden, vor. Diese Lithium-Ionen können durch die feste Koordination an anderen Stellen nicht mit dem negativ geladenen Sauerstoff wechselwirken und können so ungewollte, zusätzliche Additionsschritte nicht unterbinden. Unpolare Lösungsmittel sind Lösungsmittel aus der Gruppe der aromatischen Kohlenwasserstoffe ohne Heteroatom. Mögliche unpolare Lösungsmittel können beispielsweise Benzol, Toluol, Xylol, Mesiytlen oder weitere einfach oder mehrfach alklysubsitituierte Derivate oder Mischungen mindestens zweier Lösungsmittel aus dieser Gruppe sein.

In einer bevorzugten Ausführungsform des Verfahrens kann der polare Block ein Polyethylenoxidblock sein. Das erfindungsgemäße Verfahren hat sich insbesondere in den Fällen als besonders vorteilhaft herausgestellt, in denen ein sehr kurzer, polarer Polymerblock an einen größeren unpolaren Polymerblock angebunden werden muss. Diese Ausgestaltung ist mit Verfahren des Standes der Technik nur sehr schwer umzusetzen (s.o.), da eine konsequente Kontrolle und Nachverfolgung der Umsetzung mit sehr kurzen Kettenlängen analytisch nur sehr schwer durchzuführen ist. Zudem ergeben sich bei sehr kurzen Polymerkettenlängen des polaren Polymerblocks bei kleinen Störungen in der Synthese sofort große relative Abweichungen in der Zusammensetzung. Insofern kann gerade in diesen Synthesesituationen das erfindungsgemäße Verfahren zu einem doch deutlich reproduzierbareren Aufbau der einzelnen BCPs beitragen. Insbesondere über das erfindungsgemäße Verfahren kann die Anbindung sehr definierter, polarer Ethylenoxid-Blöcke erfolgen. Die vorgeschlagene Synthese führt dabei zu sehr gleichmäßigen Block-Copolymeren, wobei insbesondere die Molekulargewichtsverteilung äußerst homogen ist. Dies kann insbesondere dazu führen, dass diese sehr homogene Molekulargewichtsverteilung der Blockpolymere sich zum Aufbau von Polymerelektrolyten besonders eignet.

Innerhalb einer bevorzugten Ausgestaltung des Verfahrens kann zur Funktionalisierung des polaren Polymerblocks dieser Block mit einer Base ausgesucht aus der Gruppe bestehend aus Lithiumhydrid, Natriumhydrid, Kaliumhydrid, Kalium-tert-butanolat, Lithium-tert-butanolat, Natrium-tert-butanolat, Kaliummetall, Natriummetall, Lithiummetall, Lithium-bis(trimethylsilyl)amid oder Mischungen daraus deprotoniert und anschließend mit Epichlorhydrin umgesetzt werden. Entscheidend für die Auswahl der Base, welche zur Deprotonierung der endständigen Hydroxygruppe(n) der PEG-basierten Kette eingesetzt wird, ist, dass sie eine starke Base aber gleichzeitig ein schwaches Nukleophil ist. Die Reaktionszeit, die Konzentration bzw. das Konzentrationsverhältnis der Komponenten zueinander, die Löslichkeit der Einzelkomponenten und die chemischen Eigenschaften des durch die Endfunktionalisierung gebildeten Salzes spielen für einen quantitativen Umsatz eine entscheidende Rolle. Dies gilt umso mehr, da das oligomere Edukt und das Epoxid-endfunktionalisierte Produkt sich analytisch kaum voneinander unterscheiden lassen und diese bei unvollständigem Umsatz nicht voneinander trennbar sind. Diese Basenauswahl hat sich zur Erreichung eines vollständigen Umsatzes innerhalb kurzer Reaktionszeiten als besonders geeignet herausgestellt.

Die Durchführung der Kopplung der unterschiedlichen Blöcke in Lösungsmitteln ausgesucht aus der Gruppe der aromatischen Kohlenwasserstoffe oder Mischungen daraus, wie beispielsweise Toluol oder Benzol führt zu besonders kleinen PDIs des Block-Copolymers: d.h. eine Polydispersität von größer oder gleich 1,0 und kleiner oder gleich 1,05, wobei die Polydispersität sich aus dem Verhältnis von Gewichts- zu Zahlenmittel des Molekulargewichts ergibt und das Molekulargewicht über GPC-Messungen und die unten definierten Bedingungen erhalten wird. Ohne durch die Theorie gebunden zu sein kann dies auf die spezielle Wechselwirkung des Lösungsmittels mit dem Lithium-Ionen und dem negativ geladenen Addukt zurückzuführen sein, welche eine weitere Reaktion an diesem Zentrum besonders effizient verhindert und so zu einer besonders kontrollierbaren Additionsreaktion beiträgt.

Innerhalb eines weiter bevorzugten Aspektes des Verfahrens kann der Li-Organyl-Initiator ein Alkylithium-Initiator mit einem pKa-Wert von größer oder gleich 50 sein. Der erfindungsgemäße Aufbau des unpolaren Blocks und die erfindungsgemäße Anbindung des polaren Blocks kann besonders günstig über einen Alkylithium-Initiator mit einem pKa-Wert größer oder gleich 50 dargestellt werden. Diese Verfahrensführung führt zu Blockpolymeren mit sehr definierter und geringer Polydispersität und kann zudem den Aufwand von Trenn- und Reinigungsoperationen des Block-Copolymers deutlich verringern.

Des Weiteren erfindungsgemäß ist ein Block-Copolymer erhalten nach dem erfindungsgemäßen Verfahren, wobei der polare Block und das gesamte Block-Copolymer eine Polydispersität von größer oder gleich 1,0 und kleiner oder gleich 1,05 aufweisen, wobei die Polydispersität sich aus dem Verhältnis von Gewichts- zu Zahlenmittel des Molekulargewichts ergibt und das Molekulargewicht über GPC-Messungen und die unten definierten Bedingungen erhalten wird. Mittels des erfindungsgemäßen Verfahrens lassen sich BPCs erhalten, welche einen im Vergleich zu den aus dem Stand der Technik bekannten Block-Copolymeren gleichmäßigeren Aufbau aufweisen. Es lassen sich sehr viele Kombinationen aus unterschiedlichen Monomeren, auch mit unterschiedlichen Polaritäten, verarbeiten und insofern werden geordnete Block-Copolymere verfügbar, welche über die Stand der Technik Verfahren so nicht erhältlich sind. Die Anbindung der unterschiedlichen Blöcke erfolgt derart, dass die Struktur der einzelnen Blöcke und die sterischen Wechselwirkungen der BCPs untereinander möglichst wenig gestört werden. Es ergeben sich somit gleichmäßigere mechanische und auch ionenleitende Eigenschaften. Die Reaktion ist im hohen Maße steuerbar, so dass sich für die einzelnen BCPs nur sehr geringe Abweichungen in den Molekulargewichten ergeben. Die darstellbare Gleichmäßigkeit in Bezug auf das Molekulargewicht ist über mehrere, hintereinandergeschaltete anionische Polymerisationen oder vergleichbare Verfahren zum Aufbau geordneter Block Copolymere so nicht erhältlich.

In einer weiter bevorzugten Ausführungsform kann ein Blockpolymer erfindungsgemäß sein, welches einen unpolaren Block aus konjugierten Dienen, Styrol, deren Derivaten oder Mischungen daraus und einen polaren Polymerblock mit einem Molekulargewicht von größer oder gleich 450 g/mol und kleiner oder gleich 3000 g/mol aus Ethylenoxid aufweist, wobei der polare Polymerblock mit einem Epichlorhydrin zur Reaktion gebracht wird und über die am polaren Block verbleibende Epoxygruppe einmalig kovalent an den unpolaren Block angebunden wird. Die Vorteile dieses Block-Copolymers werden im Bereich des erfindungsgemäßen Verfahrens und der erfindungsgemäßen Verwendung diskutiert.

Erfindungsgemäß weisen in dem durch das erfindungsgemäße Verfahren erhaltenen Blockcopolymer der polare Block und das gesamte Block-Copolymer eine Polydispersität von größer oder gleich 1,0 und kleiner oder gleich 1,05 auf, wobei die Polydispersität sich aus dem Verhältnis von Gewichts- zu Zahlenmittel des Molekulargewichts ergibt und das Molekulargewicht über GPC-Messungen und die unten definierten Bedingungen erhalten wird. Neben der chemischen Gleichmäßigkeit der Anbindungsstelle der unterschiedlichen Polymerblöcke können sowohl die polaren Blöcke als auch die insgesamt erhältlichen BPCs ein sehr reproduzierbares Molekulargewicht aufweisen. Es ergibt sich also eine monodisperse Molekulargewichtsverteilung der Polymergesamtheit, wobei die Polydispersität sich aus dem Verhältnis von Gewichts- zu Zahlenmittel berechnet. Das Molekulargewicht der einzelnen BCPs lässt sich dabei über GPC-Messungen erhalten, und die unten definierten Bedingungen erhalten wird. Die Polydispersität der erhältlichen Block-Copolymere größer oder gleich 1,0 und kleiner oder gleich 1,05, des Weiteren bevorzugt größer oder gleich 1,0 und kleiner oder gleich 1,04 betragen.

Innerhalb einer weiter bevorzugten Ausgestaltung des Block-Copolymers kann das Block-Copolymer ein Molekulargewicht von größer oder gleich 20 kg/mol und kleiner oder gleich 250 kg/mol aufweisen. Die erfindungsgemäßen Block-Copolymere können insbesondere kurz- bis mittelkettige Co-Polymere im oben angegebenen Molekulargewichtsbereich sein. Über die Festlegung auf relativ kurze, polare Polymerblöcke innerhalb des Block-Copolymers ergibt sich ein im Wesentlichen unpolares Blockpolymer, in welchen sich die kurzen polaren Domänen bevorzugt aneinanderlagern können. In Kombination mit der Eigenschaft, dass die polaren Blöcke im Idealfall sämtlich gleich lang sind, können deutlich verbesserte, geordnete Strukturen bereitgestellt werden. Dieser Vorteil der verbesserten Selbstorganisation kann insbesondere bei der Einlagerung von Alkali-, insbesondere von Lithiumionen in die sich bildenden, geordneten polaren Polymerstrukturen beobachtet werden. Bevorzugt kann das Molekulargewicht größer oder gleich 25 kg/mol und kleiner oder gleich 150 kg/mol, des Weiteren bevorzugt größer oder gleich 30 kg/mol und kleiner oder gleich 110 kg/mol betragen.

Innerhalb eines weiter bevorzugten Aspektes des Block-Copolymers kann der polare Polymerblock ein Ethylenoxidblock sein, wobei der Ethylenoxidblock ein Molekulargewicht von größer oder gleich 450 g/mol und kleiner oder gleich 3000 g/mol aufweist. Der Vorteil einer verbesserten Selbstorganisation durch Zusammenlagerung mehrerer Polymere kann sich insbesondere in den Fällen ergeben, in denen relativ kurzkettige polare Ethylenoxid-Blöcke vorhanden sind. Innerhalb des zum Großteil unpolaren Polymerblocks können sich die einzelnen kurzen polaren Domänen so zusammenschließen, dass eine zumindest teilweise kristalline oder lamellare Struktur ausgebildet wird. Durch diese hoch geordneten Strukturen, können insbesondere Alkali-Metall-Ionen diffundieren. In diesem Sinne kann der angegebene Molekulargewichtsbereich dazu beitragen, dass verbesserte Ionenleitfähigkeiten innerhalb eines Elektrolyten aus mehreren Blockpolymeren erhalten werden.

Nach einer bevorzugten Charakteristik des Block-Copolymers kann der unpolare Polymerblock ein Polyisopren-Polystyrol-Diblockpolymer und polare Polymerblock ein Ethylenoxidblock sein, wobei das Gewichtsverhältnis vom polaren zu unpolaren Blockpolymeranteilen, ausgedrückt als Gewicht polarer Block dividiert durch Gewicht gesamtes BCP, größer oder gleich 0,5 % und kleiner oder gleich 10 % beträgt. Innerhalb dieser Anteils-Verhältnisse zwischen unpolaren und polaren Blöcken können insbesondere in Verbindung mit einer sehr reproduzierbaren Molmassenverteilung besonders geeignete Block-Copolymere bereitgestellt werden. Diese Block-Copolymere können sich insbesondere zum Einsatz als Basisstruktur in Alkali-Metall-Batterien eignen, wobei basierend auf der sehr geringen Polydispersität sich verbesserte Ionenleitfähigkeiten einstellen können. Weiter bevorzugt kann das Gewichtsverhältnis größer oder gleich 1 % und kleiner oder gleich 7 %, des Weiteren bevorzugt größer oder gleich 1,5 % und kleiner oder gleich 6 % betragen.

Des Weiteren erfindungsgemäß ist die Verwendung eines Block-Copolymers zum Einsatz als Polymerelektrolyt in Alkali-Ionenbatterien, wobei der Block-Copolymer nach dem erfindungsgemäßen Verfahren zur sequentiellen und konvergenten Herstellung geordneter Block-Copolymere, wobei der polare Block und das gesamte Block-Copolymer eine Polydispersität von größer oder gleich 1,0 und kleiner oder gleich 1,05 aufweisen, wobei die Polydispersität sich aus dem Verhältnis von Gewichts- zu Zahlenmittel des Molekulargewichts ergibt und das Molekulargewicht über GPC-Messungen und die unten definierten Bedingungen erhalten wird. Durch den sehr reproduzierbaren, geordneten Aufbau eignen sich die erfindungsgemäß hergestellten BCPs insbesondere für den Aufbau von Polymerelektrolyten in Alkali-Ionenbatterien. Der Polymerelektrolyt umfasst dabei insgesamt mindestens ein Alkaliionensalz, ein Lösemittel und die erfindungsgemäßen Blockpolymere. Gegebenenfalls kann der Elektrolyt im Produkt zurückgebliebenes Restlösungsmittel enthalten. Das Restlösemittel kann fest in die "Struktur eingebaut" bzw. vom Alkaliionensalz "festgehalten" werden, wobei das Restlösemittel insbesondere auch für zur weiteren Erhöhung der Alkaliionenmobilität und damit den ionischen Ladungstransport beitragen kann. Eine Kombination oder ein Zusammenschluss aus polaren lithiumionenleitenden Domänen innerhalb einer geordneten BCP-Matrix mit einer extrem hohen lokalen Salzkonzentration kann, bei gleichzeitig sehr kurzen PEO-Blocklängen, insbesondere zu einer schnellen Lithiumionenleitung mit Entkopplung der Polymersegmentbeweglichkeit führen.

Dadurch erreicht das 3D-strukturierte BCP bereits bei niedrigeren Temperaturen (beispielsweise -20°C) eine hohe Gesamtleitfähigkeit von größer als 1 mS/cm und behält die sehr hohe Gesamtleitfähigkeit über einen sehr breiten Temperaturbereich, beispielsweise von -20 °C bis 90 °C bei. Diese Gesamtleitfähigkeit erreichen klassische, amorphe PEO-basierte Salz-in-Polymerelektrolyte erst oberhalb 80°C. BCPs mit sehr kurzen PEO-Blöcken zeigen zudem gegenüber reinem Salz-in-PEO eine um den Faktor 3 bis 4 erhöhte Lithiumionen-Überführungszahl. Dies zeigt gegenüber Salz-in-PEO Systemen eine weitere selektive Zunahme der Lithiumionenteilleitfähigkeit bei verbesserter mechanischer Stabilität. Es lassen sich also verbesserte Polymerelektrolyte erhalten, welche separat steuerbar, sowohl verbesserte ionenleitende wie auch mechanische Eigenschaften aufweisen.

In einer weiter bevorzugten Ausführungsform der Verwendung kann das EO/Alkaliionen-Verhältnis im Polymerelektrolyt der Alkali-Ionenbatterie größer oder gleich 1:1 und kleiner oder gleich 1:20 betragen. Die auf der sehr reproduzierbaren Molekulargewichtsverteilung der einzelnen Block-Copolymere basierende verbesserte Ausrichtung der Blockpolymere untereinander kann insbesondere mit oben angegebenen EO/Alkaliionen-Verhältnis zu besonders verbesserten Leitfähigkeiten in Polymerelektrolyten beitragen. Die verbesserten Leitfähigkeiten können sich zudem über einen vergrößerten Temperaturbereich ergeben und zudem ist es möglich, dass die Änderung der Leitfähigkeit als Funktion der Temperatur über einen größeren Temperaturbereich gleichmäßiger ansteigt als bei bisher erhältlichen Polymerelektrolyten. Als mögliche Leitsalze können beispielsweise sämtliche Alkaliionensalze verwendet werden, welche sehr gut in aprotisch-polare Lösungsmittel löslich sind. Zu diesen Leitsalzen gehören beispielsweise LiPF₆, LiFSI, analoge Sulfonylimide oder Mischungen daraus. Besonders hohe Leitfähigkeiten können beispielsweise mit dem Leitsalz LiTFSI erreicht werden.

Weiterhin erfindungsgemäß ist ein Polymerelektrolyt, wobei die polymeren Bestandteile des Polymerelektrolyten Block-Copolymere hergestellt nach dem erfindungsgemäßen Verfahren zur sequentiellen und konvergenten Herstellung geordneter Block-Copolymere, wobei der polare Block und das gesamte Block-Copolymer eine Polydispersität von größer oder gleich 1,0 und kleiner oder gleich 1,05 aufweisen, wobei die Polydispersität sich aus dem Verhältnis von Gewichts- zu Zahlenmittel des Molekulargewichts ergibt und das Molekulargewicht über GPC-Messungen und die unten definierten Bedingungen erhalten wird.

Der Aufbau von Polymerelektrolyten mit einem Anteil der erfindungsgemäßen BCPs kann die ionenleitenden Eigenschaften der Polymerelektrolyte deutlich verbessern. Die Zugabe der BPCs kann beispielsweise das Temperaturverhalten und/oder die ionische Leitfähigkeit verbessern. In vielen Fällen kann die Zugabe weiterhin die mechanische Festigkeit des Elektrolyten erhöhen. Die Zugabe der erfindungsgemäßen BCPs bezogen auf den gesamten Polymerbestandteil des Polymerelektrolyten kann bevorzugt größer oder gleich 25 Gew.-% und kleiner oder gleich 100 Gew.-%, des Weiteren bevorzugt größer oder gleich 50 Gew.-% und kleiner oder gleich 100 Gew.-% und weiterhin bevorzugt größer oder gleich 75 Gew.-% und kleiner oder gleich 100 Gew.-% betragen.

Die besonderen Vorteile der erfindungsgemäßen BCPs können sich in besonders hohem Maße ergeben, wenn die polymere Grundstruktur der Polymerelektrolyten ganz aus den erfindungsgemäßen BCPs aufgebaut wird. In diesen Fällen können über große Temperaturbereiche sehr hohe Ionen-Leitfähigkeiten bereitgestellt werden. Ohne durch die Theorie gebunden zu sein, scheint dies auf eine besonders günstige Ausrichtung der relativ kurzen polaren Domänen der unterschiedlichen Polymere zu beruhen, welche zu einer besonders effizienten Weiterleitung von Ionen als Funktion einer angelegten Spannung führt. Der Polymerelektrolyt kann aus den erfindungsgemäßen BCPs bestehen, wenn der Anteil weiterer als polymere Bestandteile des Polymerelektrolyten wirkender Polymere kleiner oder gleich 5 Gew.-%, des Weiteren bevorzugt kleiner oder gleich 2,5 Gew.-% und weiterhin bevorzugt kleiner oder gleich 1 Gew.-% beträgt.

Innerhalb einer weiter bevorzugten Ausgestaltung des Polymerelektrolyten kann der Polymerelektrolyt bei -20°C eine Leitfähigkeit von größer oder gleich 1 mS/cm aufweisen. Die erfindungsgemäßen Polymerelektrolyte aus den erfindungsgemäßen BCPs können aufgrund des sehr geringen PDIs der BCPs deutlich verbesserte Leitfähigkeiten auch schon bei sehr tiefen Temperaturen bereitstellen. Dies kann hochwahrscheinlich auf die geringe Anzahl an unerwünschten Fremdatomen durch die konsequente Herstellung gewährleistet werden. Zudem kann die sehr gleichmäßige Länge der BCPs zu einer sehr geordneten Ausrichtung der polaren Domänen beitragen, welches sich günstig auf die darstellbare Ionenleitfähigkeit aufweist.

Nach einer bevorzugten Charakteristik des Polymerelektrolyten kann der Polymerelektrolyt in einem Temperaturbereich von größer oder gleich -20°C und kleiner oder gleich 90°C eine Leitfähigkeit von größer oder gleich 1 mS/cm aufweist. Überraschenderweise hat sich gezeigt, dass die erfindungsgemäßen Polymerelektrolyte mit polymeren Bestandteilen aus den erfindungsgemäßen BCPs eine außergewöhnlich hohe Leitfähigkeit über einen besonders großen Temperaturbereich bereitstellen können. Ohne durch die Theorie gebunden zu sein kann dies auf die besondere Anordnung der polaren Ketten zurückzuführen sein, welche aufgrund der sehr gleichmäßigen Kettenlängen des unpolaren und polaren Blocks erreicht wird. Diese Strukturen scheinen über einen besonders großen Temperaturbereich stabil zu sein.

Nach einer bevorzugten Charakteristik des Polymerelektrolyten kann der Polymerelektrolyt einen Restlösemittelgehalt von größer oder gleich 0,1 Gew.-% und kleiner oder gleich 30 Gew.-% aufweisen. Überraschenderweise hat sich gezeigt, dass ein kleiner Anteil an Restlösemittel in den Polymerelektrolyten zu einer verbesserten Leitfähigkeit beitragen kann. Das Restlösemittel ist das Lösemittel zur Auflösung des Leitsalzes und des BCPs. Die Restlösemittel dienen in diesen anscheinend nicht nur als klassische Lösemittel, sondern koordinieren an die im BCP eingelagerten Alkaliionensalze. Die Koordination kann anscheinend zu einer verbesserten Weiterleitung von Li-Ionen beitragen, sodass schon bei tiefen Temperaturen sehr hohe Leitfähigkeiten erreicht werden können. Als "assoziierende" Restlösemittel kommen beispielsweise aprotisch-polare Lösungsmittel beispielsweise aus der Gruppe der Ether, Carbonate, Lactone, Ester, Nitrile, Sulfone, Phosphate als auch Gemische aus diesen in Frage. Als besonders vorteilhaft hat sich die Verwendung von z. B. THF, PC, GBL, MTBE oder DMC bzw. Gemische mindestens zweier dieser gezeigt. Es lassen sich schon signifikante Effekte bei einem Gewichtsanteil von kleiner oder gleich 20 Gew.-%, bevorzugt kleiner oder gleich 15 Gew.-% erzeugen, wobei der Gewichtsanteil auf das Gewicht des Polymerelektrolyten aus Polymer, Leitsalz und Lösungsmittel bezogen ist.

Weiterhin erfindungsgemäß ist eine Li-Ionenbatterie, welche den erfindungsgemäßen Polymerelektrolyten aufweist. Für die Vorteile der erfindungsgemäßen Li-Ionenbatterie wird explizit auf die Vorteile der erfindungsgemäßen BCPs und die Vorteile der daraus herstellbaren, erfindungsgemäßen Polymerelektrolyte verwiesen.

Weitere Vorteile und vorteilhafte Ausgestaltungen der erfindungsgemäßen Gegenstände werden durch die Figuren veranschaulicht und in den nachfolgenden Beispielen erläutert. Dabei ist zu beachten, dass die Figuren nur beschreibenden Charakter haben und nicht dazu gedacht sind, die Erfindung in einer Form einzuschränken.

### Beispiele

Es wird ein BCP aus zwei unpolaren und einem kurzen polaren Block aufgebaut. Der kurze polare Block ist ein "vorgefertigter" PEO-Block, welcher ein-schrittig und einmalig konvergent kovalent an die beiden durch eine lebende sequentielle anionische Polymerisation aufgebauten Polymerblöcke angebunden wird.

Die verwendeten Chemikalien wiesen eine Reinheit von größer oder gleich 99 % und der Wassergehalt lag unterhalb von 10 ppm.

### 1. Funktionalisierung von PEO-Blöcken mit unterschiedlichem Molekulargewicht

Es wurden PEG-basierte Ketten mit Molekulargewichten von 164 g/mol, 350 g/mol, 750 g/mol, 1000 g/mol, 1900 g/mol, 2000 g/mol und 3000 g/mol funktionalisiert.

Sämtliche PEO-Blöcke wurden wie nachfolgend beschrieben funktionalisiert und mit den gleichen Messgeräten und Messbedingungen charakterisiert.

Unter Schutzgasatmosphäre werden 896 mg (9,32 mmol) der sublimierten Base Natrium-tert-butanolat in 60 mL über Molsieb getrocknetem THF bei Raumtemperatur in einem Kolben unter Rühren aufgelöst. Parallel dazu wird in einem weiteren Reaktionskolben unter Schutzgasatmosphäre 12,11 g (6,29 mmol) die im Hochvakuum getrockneten PEG-basierten Ketten (mPEG mit einer Kettenlänge von 1900 g/mol, das m bei mPEG steht dafür, dass an einer Seite der PEG-Kette eine terminale Methylgruppe gebunden ist) in 60 mL über Molsieb getrocknetem THF bei Raumtemperatur unter Schutzgasatmosphäre über Nacht gerührt und aufgelöst.

Anschließend wird unter Schutzgasatmosphäre die in THF gelöste Base in den Reaktionskolben überführt und für ca. 72 h unter Schutzgasatmosphäre bei Raumtemperatur gerührt. Nach dieser Zeitspanne ist die Deprotonierung der PEG-basierten Kette abgeschlossen und es werden anschließend unter Schutzgasatmosphäre 4,54 g (49,04 mmol) des über Molsieb getrocknete Epichlorhydrins innerhalb von 15 min tropfenweise hinzugefügt und für ca. 6 Tage bei Raumtemperatur unter Schutzgasatmosphäre gerührt. Danach werden die flüchtigen Bestandteile (THF, tert-Butanol und überschüssiges Epichlorhydrin) unter Vakuum bei einer Temperatur unterhalb von 60°C entfernt. Zum getrockneten Rückstand werden unter Schutzgasatmosphäre 40 mL über Molsieb trockenes THF dazu gegeben und über Nacht bei Raumtemperatur unter Schutzgasatmosphäre gerührt. Das bei der Reaktion gebildete und ausgefallene Salz wird anschließend über Zentrifugation und nachfolgender Filtration von der Lösung abgetrennt. Das Lösungsmittel wird unter Vakuum bei Raumtemperatur entfernt.

Das erhaltene Produkt wird unter leichtem Erwärmen in wenig Toluol gelöst. Zum Ausfällen des Produktes wird die erwärmte Lösung nach Zusatz vorgekühltem Diethylethers zentrifugiert. Das Produkt wird durch Trocknen unter Vakuum vom restlichen Diethylether und weiteren flüchtigen Bestandteilen befreit und anschließend mehrere Tage im Hochvakuum getrocknet.

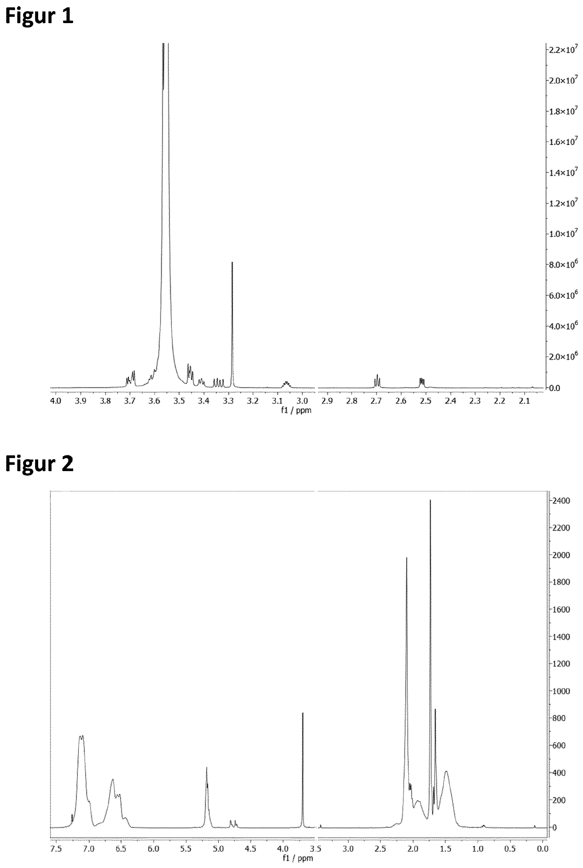

Das erhaltene Produkt wird über quantitative ¹H-NMR (500 MHz) (Figur 1) und IR-Spektrometrie charakterisiert. Die NMR-Messung ist bei T = 300 K in CDCl₃ (7.26 ppm) durchgeführt worden. Für das ¹H NMR-Spektrum der endfunktionalisierten PEO-Ketten werden 32 Scans mit einem Bruker AVANCE NEO 500 MHz mit einer Aufnahmezeit vom FID (AQ) von 4,72 sec und einer Wartezeit bis zum nächsten Scann (d1) von 30 sec gefahren. Das Spektrum wird mit der Software MestReNova 12.0.4-22023 ausgewertet.

Die Peaks bei einer chemischen Verschiebung von 2,52 ppm, 2,7 ppm und 3,06 ppm sind charakteristisch für die durch die Funktionalisierung ans PEG-Kettenende angehängte Epoxidgruppen-Protonen, wobei die Intensitäten dieser drei Peaks, wie es für die verschiedenen Protonen zu erwarten ist, gleich groß sind. Der Peak bei einer chemischen Verschiebung von ca. 3,29 ppm ist den drei Protonen der am PEG-Kettenende befindlichen Methylgruppe zu zuordnen. Die Umsetzung ist quantitativ, welches dadurch gezeigt wird, dass die Fläche unter dem 3,29 ppm Peak der Summe der drei für die Epoxidgruppen-Protonen charakteristischen Peaks entspricht. Die Peaks im Bereich der chemischen Verschiebung von ca. 3,73 - 3,31 ppm sind den nicht endständigen (also den Gruppen am Kettenende) Protonen der PEG-Kette zu zuordnen. Im IR-Spektrum (nicht gezeigt) können nach der Funktionalisierung des PEGs keine OH-Gruppen mehr nachgewiesen werden.

### 2. Aufbau des BCPs

Sämtliche hergestellten BCPs wurden wie nachfolgend beschrieben synthetisiert, wobei einzig die Initiator- und Monomermengen entsprechend der gewünschten BCP-Zusammensetzung angepasst bzw. verändert wurden. Die Charakterisierung wurde mit den gleichen Messgeräten und Messbedingungen durchgeführt.

Es wird ein Diblock-Copolymer aus Polyisopren (PI) und Polystyrol (PS) mittels lebender sequentieller anionischer Polymerisation aufgebaut und anschließend mit der endfunktionalisierten PEG-Kette zum entsprechenden Triblock-Copolymer umgesetzt.

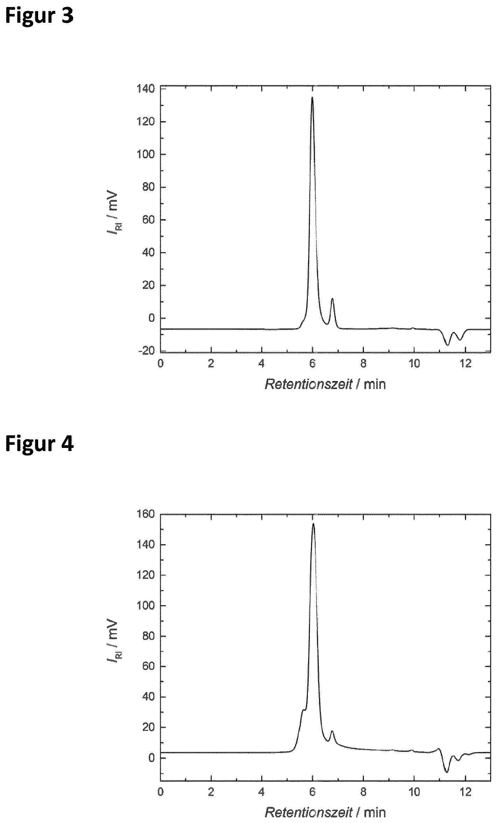

Die lebende sequentielle anionische Polymerisation wird unter Schutzgasatmosphäre bei Raumtemperatur durchgeführt. Das Toluol, Isopren und Styrol wurden zuvor jeweils über Molsieb getrocknet und vor der Verwendung unter Schutzgasatmosphäre frisch destilliert. Zunächst werden die beiden unpolaren Blöcke (zuerst PI und anschließend PS) des BCP aufgebaut. Dazu werden 134 g Toluol in einen Reaktionskolben gegeben. Anschließend werden unter Rühren 178 µL einer 1,43 M Cyclohexan-Lösung des Initiators (sec-Butyllithium) dazugegeben. Danach werden 4,02 g (58,97 mmol) des Isoprens zur Reaktionslösung hinzugefügt und über Nacht unter Rühren reagieren gelassen. Anschließend werden 9,73 g (93,42 mmol) Styrol zur Reaktionslösung hinzugefügt und ebenfalls über Nacht reagieren gelassen. Es wird eine Probe für eine GPC Messung des PI-PS-Blocks aus der Reaktionslösung entnommen. Anschließend wird zu der Lösung des lebenden PI-PS-Anions 0,7598 g (383,28 µmol) der endfunktionalisierten PEG-basierten Kette (Mₙ = 1900 g/mol) unter Rühren hinzugefügt. Die Mischung wird für 3 Tage gerührt. Nach dieser Zeit wird das Produkt mit 250 µL einer 1,2 M methanolischer Salzsäure versetzt, getrocknet und in Dichlormethan gelöst. Die erhaltene Lösung wird langsam in eine Methanol-Vorlage getropft, die Flüssigkeit abdekantiert und das ausgefallene BCP getrocknet. Das erhaltene Produkt wird im Hochvakuum getrocknet. Man erhält einen weißen Feststoff, welcher über quantitative ¹H-NMR-Spektroskopie (Figur 2) und GPC-Chromatographie (Figur 3) charakterisiert wird.

Die GPC-Chromatogramme des PI-PS-Blocks (Figur 4) und des PI-PS-PEO-Blocks (Figur 3) wurden mit einer Messzeit von 0 - 13 min und einem Messintervall von 100 msec aufgenommen (Säule TSKgel GMHHR-N, Flussrate 1 mL/min, Lösemittel THF, T = 40°C). Ein Vergleich der GPC-Chromatogramme zeigt, dass der addierte PEO-Block zu kurz ist, um im GPC-Chromatogramm ein signifikantes Signal zu ergeben. Es ist, falls überhaupt, nur eine leichte Tendenz zu schwereren Mₙ (101.400 g/mol auf 107.500 g/mol) zu erkennen. Es lässt sich aber entnehmen, dass die funktionalisierten PEO-Ketten genau einmal an das PI-PS-Anion angebunden wurden, da sich sonst höhere Mₙ des BCP ergeben würden, weil die endfunktionalisierten PEG-basierten Ketten im Überschuss zur Reaktionslösung hinzugefügt werden. Es wird eine sehr gute Polydispersität von kleiner 1,1 erreicht (Polydispersität = M_{W}/Mₙ).

Das quantitative ¹H-NMR-Spektrum des Triblock-Copolymers (Figur 2) zeigt ein kleine Peakspitze bei einer chemischen Verschiebung von 7,26 ppm, welche dem Lösungsmittel CDCl₃ zu zuordnen ist. Die Peaks im Bereich von ca. 7,3 - 6,3 ppm sind den Protonen des Phenylrestes des Polystyrols zu zuordnen. Die Peaks im Bereich von ca. 5,3 - 4,6 ppm sind den Protonen an den Doppelbindungen des (1,4 und 3,4) Polyisoprens zu zuordnen. Der Peak bei ca. 3,7 ppm ist den Protonen des PEOs zu zuordnen. Da dieser Peak auch nach den Aufreinigungsschritten des Produktes immer noch vorhanden ist, muss die PEO- bzw. PEG-Kette kovalent an den unpolaren Block angebunden sein. Die funktionalisierten PEG-Ketten konnten genau einmal an das PI-PS-Anion angebunden werden, da es nach der Anbindung der PEO-Kette keine Weiterreaktion der Epoxidgruppen geben kann. Anderenfalls würde die Peakfläche des Peaks bei ca. 3,7 ppm im Verhältnis größer sein. Die Peaks im Bereich von ca. 2,4 - 1,2 ppm sind den Protonen des Polymerrückgrats zu zuordnen. Das quantitative ¹H-NMR-Spektrum belegt, dass das gewünschte geordnete Tri-Blockcopolymer erhalten wurde. Die Molekulargewichtsanteile der einzelnen Monomere ergeben sich zu M_{n, PI}= 31,2 kg/mol, M_{n, PS}= 74,4 kg/mol und M_{n, PEO}= 1,9 kg/mol.

### 3. Charakterisierung der Eigenschaften der BCPs

Um aus dem BCP ein Polymerelektrolyt zu erhalten, wird das BCP sowie die berechnete Menge an Leitsalz in einem gemeinsamen Lösungsmittel bzw. Lösungsmittelgemisch gelöst. Die erhaltene Lösung wird in Teflongefäße gefüllt und bei Raumtemperatur unter Schutzgasatmosphäre langsam (über 5 Tage hinweg) das Lösungsmittel verdampft. Die so erhaltene Polymerelektrolytmembran wird dann auf die gewünschte Dicke gepresst und ein passendes Stück mit der gewünschten Größe ausgestanzt.

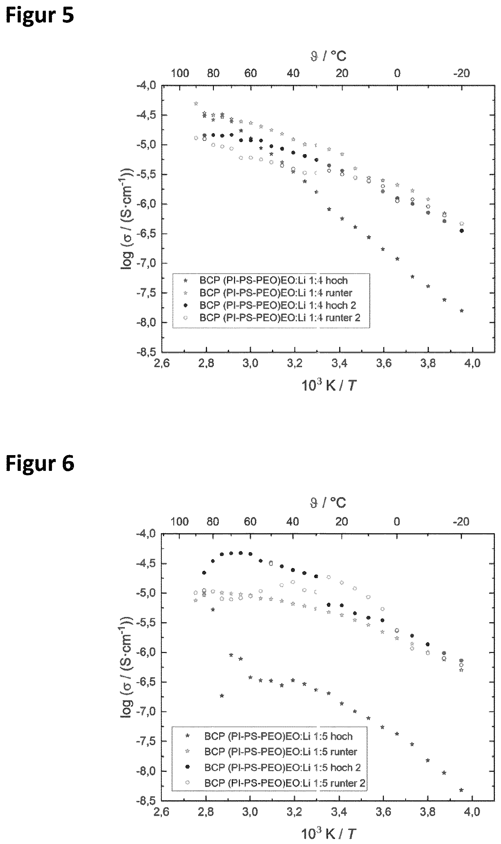

Die Messungen der ionischen Gesamtleitfähigkeit von Polymerelektrolyten aus den erfindungsgemäßen hergestellten BCPs mit unterschiedlichen LiTFSI(Lithium bis(trifluoromethansulfonyl)imid)-Leitsalzkonzentrationen sind in den Figuren 5 und 6 dargestellt. Die Figur 5 zeigt Messungen mit einem EO:Li-Verhältnis von 1 zu 4 und die Figur 6 mit einem EO:Li-Verhältnis von 1 zu 5. Das EO:Li-Verhältnis definiert, wie viele Li⁺-Ionen pro Sauerstoffatom eines PEO-Monomers bzw. Wiederholeinheit vorhanden sind. Dadurch wird die Leitsalzkonzentration innerhalb des PEO-Blocks des BCPs beschrieben bzw. angegeben.

Sämtliche Messungen der ionischen Gesamtleitfähigkeit werden mit den gleichen Messgeräten und Versuchsaufbau durchgeführt. Dazu wird die zu messende Probe in Coin-Zellen mittels zweier Edelstahlelektroden kontaktiert. Die Spektren werden mit einem Metrohm Multipotentiostat M204 mit FRA32-Modul, Messsoftware Nova 2.1.4; Frequenzbereich 1 Hz bis 1 MHz mit einer Amplitude von 40 mV gemessen. Die Temperierung erfolgte in einem Klimaschrank und die Auswertung erfolgte mit Zview2.

In Figur 5 und 6 ist die Arrhenius-Auftragungen der ionischen Gesamtleitfähigkeit abgebildet. Bei den in Figur 5 und 6 gezeigten Ergebnissen wurden Triblock-BCPs (bestehend aus PI-PS-PEO) aus demselben Syntheseansatz aber mit unterschiedlichen Lithiumleitsalzkonzentration gemessen. Die Schichtdicke der Membranen betrug 1,159 mm für die Membran mit EO:Li-Verhältnis von 1 zu 4 (Figur 4) und 1,052 mm für die Membran mit einem EO:Li-Verhältnis von 1 zu 5 (Figur 6). Der Durchmesser der bei beiden Membranen betrug 15 mm.

In den Figuren 5 und 6 sind jeweils 4 Messkurven dargestellt, welche auf jeweils zwei Erwärmungs- (ausgefüllte Symbole) und zwei Abkühlungszyklen (ungefüllte Symbole) beruhen. Die Proben wurden zunächst von -20 C auf 90 °C in 5 °C Schritten erwärmt, wobei jeweils ein Impedanzspektrum aufgenommen und aus diesem die korrespondierende Leitfähigkeit ermittelt wurde. Der erste Zyklus ist durch ausgefüllte Sterne gekennzeichnet. Anschließend wird von 90 °C auf -20 °C in 5 °C Schritten abgekühlt, und jeweils die Impedanz bzw. Leitfähigkeit gemessen. Dieser zweite Zyklus ist durch ungefüllte Sterne gekennzeichnet. Anschließend wurde noch einmal erwärmt und wieder abgekühlt. Diese beiden Zyklen sind durch gefüllte/ungefüllte Kreise gekennzeichnet.

Den Leitfähigkeiten kann man entnehmen, dass nach dem ersten Heizzyklus, d.h. im ersten Abkühlzyklus, sich ein sprunghafter Anstieg der ionischen Gesamtleitfähigkeit ergibt. Dies ist ein klares Zeichen, dass sich die Domänen des BCP ausgerichtet haben. Es hat ein "self-assembly" des BCPs unter Ausbildung einer sehr gut lithiumionenleitenden Phase stattgefunden.

Es hat sich eventuell auch eine salzreiche Phase gebildet. Dies ist entscheidend für die erfindungsgemäßen BCPs. Im nachfolgenden Abkühl- und Erwärmungszyklus nähert sich die ionische Gesamtleitfähigkeit dann einem konstanteren Wert an. Dies ist ein Zeichen dafür, dass die Änderung der Struktur erhalten bleibt. Es ist zudem ein linearer Anstieg der ionischen Gesamtleitfähigkeit mit zunehmender Temperatur zu erkennen. Bei Standard PEO-Elektrolyten ergibt sich üblicherweise eine stärkere Temperaturabhängigkeit, da bei Temperaturen oberhalb von 60 °C (Glasübergangstemperatur des PEOs) ein stärkerer Anstieg der ionischen Gesamtleitfähigkeit erfolgt. Anhand der Leitfähigkeiten kann des Weiteren die Entkopplung des Ionentransports von der Segmentbewegung des Polymers angenommen werden, da die ionische Gesamtleitfähigkeit im Vergleich zu klassischen PEO-Elektrolyten weniger stark von der Temperatur abhängig ist. Dies kann darauf zurückgeführt werden, dass bei tiefen Temperaturen (unterhalb 30 °C) die Segmentbewegung des Polymers extrem langsam ist.

Die in Figur 5 und 6 erreichte ionische Gesamtleitfähigkeit ist noch nicht aufoptimiert und kann beispielsweise noch als Funktion der PEO-Kettenlängen bzw. der Monomeranteile des BCPs, der Leitsalzkonzentration, des Membranpräparationsvorgangs, der Restlösungsmittelmenge und der Auswahl des Lösungsmittels verbessert werden (vgl. dazu die Figuren 10 bis 15 sowie deren Beschreibungen).

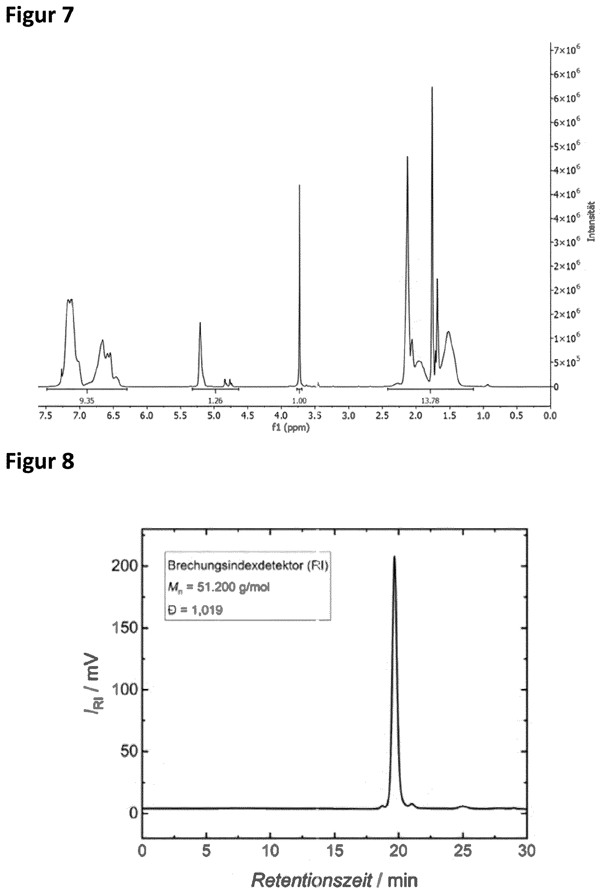

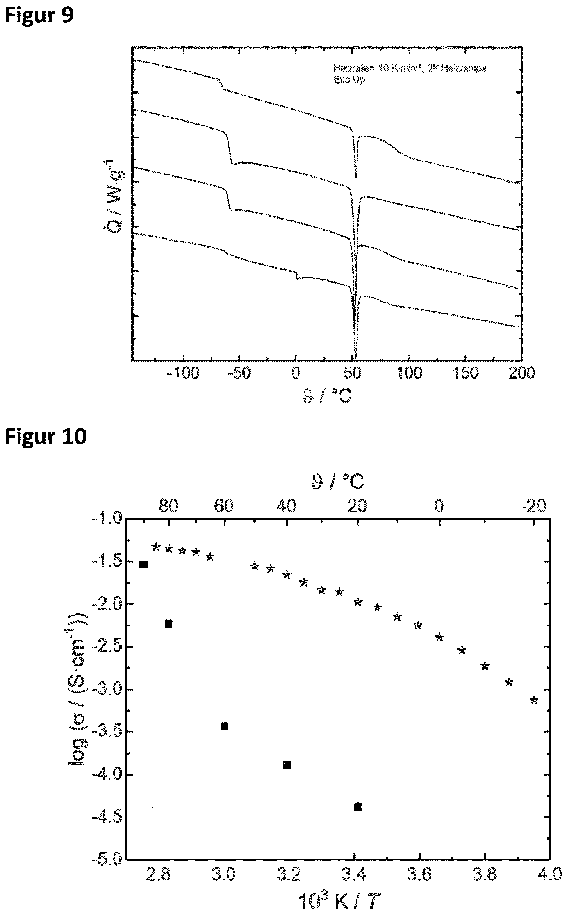

Die Figuren 7 und 8 zeigen einmal ein quantitatives ¹H-NMR und das entsprechende GPC-Chromatogramm eines erfindungsgemäß hergestellten BCPs. Die Figur 7 zeigt dabei ein quantitatives ¹H-NMR-Spektrum eines BCP mit einem unpolaren PI-PS- und einen erfindungsgemäß angekoppelten kurzen, polaren PEO-Block. Es sind die gleichen Peaks wie in Figur 2 zu erkennen und beschrieben, wobei sich lediglich die Verhältnisse bzw. Kettenlängen der einzelnen Blöcke und dementsprechend die dazugehörigen Peaks in der Intensität abhängig von der ausgewählten BCP-Zusammensetzung unterscheiden. Dies trifft auch auf die hier nicht gezeigten NMRs der anderen hergestellten BCP zu, deren Molekulargewichtsanteile der einzelnen Monomere als auch die entsprechenden PDIs in der nachfolgenden Tabelle aufgelistet und in den DSC-Kurven (Figur 9) zu erkennen sind. Die Molekulargewichtsanteile der einzelnen Monomere des BCP aus Figur 7 und 8 ergeben sich zu M_{n, PI}= 14,5 kg/mol, M_{n, PS}= 34,8 kg/mol und M_{n, PEO}= 1,9 kg/mol. Die Figur 8 zeigt das entsprechende GPC-Chromatogramm mit dem entsprechenden Polydispersitätsindex (PDI) von 1,019 und dem gesamten Molekulargewicht M_{n, ges} von 51,2 kg/mol. Hiermit wird gezeigt, dass sich erfindungsgemäß Block-Copolymere mit einem sehr kleinen PDI darstellen lassen. Die Polymere sind quasi monodispers und zeigen nur ein einziges Molekulargewicht.

Aufgrund des konvergenten Herstellungsverfahrens ist es problemlos möglich noch weitere Block-Copolymere mit variierenden Monomeranteilen zu synthetisieren. Hierzu muss lediglich die Zugabe des Initiators, der Monomere bzw. der endfunktionalisierten PEG-basierten Kette entsprechend des gewünschten BCP-Aufbaus angepasst werden. Die so erhaltenen BCPs wurden äquivalent wie in den Figuren 1 bis 4 bzw. wie in den Figuren 7 und 8 beschrieben charakterisiert. Es ergeben sich bezüglich der Zusammensetzung und bezüglich des PDIs folgende Ergebnisse:

| PI Mₙ in kg/mol | PS Mₙ in kg/mol | PEO Mₙ in kg/mol | Mₙ Gesamt in kg/mol | PDI |
|---|---|---|---|---|
| 14,5 | 34,8 | | 51,2 | 1,019 |
| 35,1 | 14,8 | 1,9 | 51,8 | 1,032 |
| 24,8 | 25,0 | | 51,7 | 1,027 |
| 6,8 | 17,3 | | 26,0 | 1,022 |

Durch die Versuche kann gezeigt werden, dass an unterschiedliche, durch eine lebende anionische Polymerisation aufgebaute unpolare Diblockpolymere, sehr reproduzierbar, kurze polare Blöcke angekoppelt werden können. Es ergeben sich sämtlich Triblockpolymere mit einem sehr niedrigen Polydispersitätsindex von unterhalb 1,04. Solche Monodispersitäten sind mit den Stand-der-Technik-Verfahren nicht darstellbar. Ohne durch die Theorie gebunden zu sein ist dies insbesondere darauf zurückzuführen, dass die lebende Polymerisation sehr gleichmäßige Polymerlängen liefert und die Anbindung einer definierten polaren Kette nicht zur Erhöhung der Polydispersität beiträgt. Dies kann insbesondere bei sehr kurzen polaren Kettenblöcken vorteilhaft sein, da eine klassische Herstellung zu prozentual deutlich höheren Abweichungen führt. Diese geringe PDI von < 1,04 ist wichtig, da die Blöcke nur eine und eine gewünschte Größe haben, welches zur Ausbildung hochgeordneter Strukturen zwischen den einzelnen Polymeren führt. Somit kann eine außergewöhnlich hohe Ionen-Leitfähigkeit durch die geordneten polaren Bereiche der Block-Copolymere gewährleistet werden. Zudem zeigt durch die erfindungsgemäße Anbindung des polaren Blocks der polare Bereich eine hohe chemische Gleichmäßigkeit.

Die 4 unterschiedlichen BCPs aus obiger Tabelle werden mittels DSC (DSC-Q2000, TA-Instruments corp., USA) mit LNCS-Kühlung (Liquid Nitrogen Cooling System) untersucht. Zur präzisen Aufzeichnung der Basislinie (materialspezifische Wärmekapazität) wurde die Software-gestützte Tzero^{®}-Technologie eingesetzt. Zur Erhöhung der Messgenauigkeit werden ca. 10 mg der BCP-Proben unter Schutzgas in hermetisch verschließbaren Tzero^{®}-Aluminiumtiegel eingeschlossen, deren thermisches Signal in der Steuerungssoftware (Thermal Advantage) hinterlegt ist und dadurch die Messung der spezifischen Wärmekapazitätsänderungen beim Glasübergang ermöglicht. Helium mit einem Volumenstrom von 25 mL/min wird als Spülgas (laut Vorgaben des Geräteherstellers) während der Messungen verwendet. Für die quantitative Auswertung der Schmelzenthalpie wird das Schmelzsignal eines Indium-Standards herangezogen. Die DSC-Signale werden mit der Software Universal Analysis 2000 (Version 4.5A, Build 4.5.0.5.) ausgewertet. Die Signale des Glasübergangs werden nach der Methode der "Halben Höhe", die sich aus den Tangenten der Basislinie vor und nach der Wärmekapazitätsänderung ergibt, ausgewertet. Die Ergebnisse der Messungen sind in der Figur 9 dargestellt.

Die Kurven in der Figur 9 repräsentieren in absteigender Reihenfolge die DSC-Ergebnisse der Triblock-Copolymere mit einem Gesamtmolekulargewicht von 51,2, 51,8, 51,7 und 26,0 kg/mol aus obiger Tabelle. Es ist immer das Ergebnis der zweiten Heizrampe mit einer Heizrate von 10 K/min in einem Temperaturbereich von -145 °C bis 200 °C gezeigt. In den DSC-Kurven der verschiedenen BCPs ist die Phasenseparierung der drei unabhängigen Polymerblöcke durch den ϑ_{g}-Punkt des Polyisopren-Blocks im Bereich zwischen -66 °C bis -59 °C, der ϑ_{Schmelzpunkt} des PEO-Blocks bei um die 50 °C und der ϑ_{g}-Punkt des Polystyrol-Blocks im Bereich zwischen 76 °C und 88 °C zu erkennen. Es wird postuliert, dass je größer die Kettenlänge im Polyisopren- bzw. im Polystyrol-Block ist, desto höher ist die Temperatur des ϑ_{g}-Punktes und der Betrag der Wärmekapazitätsänderung nimmt zu.

Durch das erfindungsgemäße Verfahren können die zuvor beschriebenen verschiedenen BCP durch Variierung der Blocklängen bzw. Verhältnisse zueinander hergestellt werden, wobei die hohe ionische Gesamtleitfähigkeit beibehalten wird. Es ist möglich, die mechanischen und Ionen-Transporteigenschaften separat voneinander zu optimieren und ein gewünschtes BCP zu designen, ohne dabei mit der ionischen Gesamtleitfähigkeit unterhalb der eines PEO-Referenzsystems zu fallen (vgl. Figuren 10 bis 15). Entscheidend dafür ist, dass durch das erfindungsgemäße Verfahren eine sehr enge Definition des chemischen Designs des ionenleitenden Blocks garantiert ist. Dadurch konnten eine im Vergleich zu einschlägigen Polymerelektrolyten konkurrenzlos hohe Leitfähigkeit der Lithiumionen und sonst nicht erreichbare Lithiumionen-Konzentrationen erreicht werden.

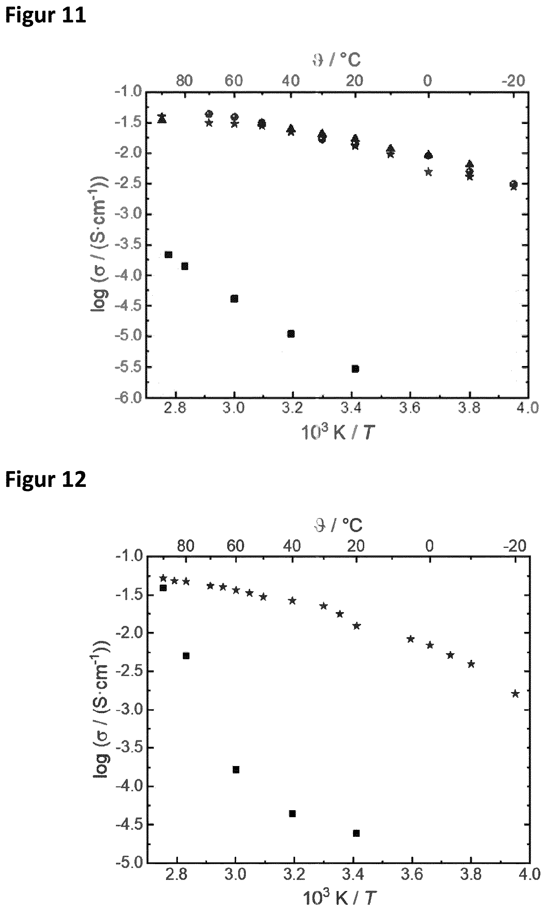

Bei den aus den erfindungsgemäß hergestellten Triblock-Copolymeren erhaltenen Polymerelektrolyten ist es besonders bemerkenswert, dass diese über den gesamten Temperaturbereich (von -20 bis 90 °C) eine konstante nahezu "Arrhenius-artige"/lineare und geringe Temperaturabhängigkeit zeigen. Diese Tatsache zusammen mit der außergewöhnlich hohen und reproduzierbaren ionischen Gesamtleitfähigkeit, es wird bei -20 °C eine Leitfähigkeit im 10⁻³ S/cm-Bereich und bei 90 °C im 10^{-1,5} S/cm-Bereich erhalten, obwohl nur weniger als 4 Gew.% (vgl. Figuren 10 und 11) und z. T. weniger als 2 Gew.% (vgl. Figur 12) an leitfähigen PEO-Domänen im BCP enthalten sind. Dies lässt darauf schließen, dass die Lithiumionen über einen "Hopping-Mechanismus ähnlichen" Transportprozess unabhängig (entkoppelt) von der Polymersegmentbeweglichkeit transportiert werden bzw. sich bewegen können.

Die Figuren 10 bis 15 zeigen die Temperaturabhängigkeit der ionischen Gesamtleitfähigkeit unterschiedlicher erfindungsgemäß hergestellter Triblock-Copolymere , wobei z. T. auch andere Lösungsmittel für das *Solution Casting* der Polymerelektrolyte verwendet wurden, in einer Arrhenius-Darstellung.

Die Figur 10 zeigt die Ergebnisse für ein PI-PS-PEO Triblock-Copolymer mit einem Gesamtmolekulargewicht von 51,2 kg/mol. Die Zusammensetzung der Blöcke entspricht den Angaben in obiger Tabelle. Die funktionale Anbindung des PEO-Blockes erfolgte über eine Funktionalisierung mit Epichlorhydrin. Als Polymerelektrolyt wurde LiTFSI als Leitsalz in einem EO:Li-Verhältnis von 1:4,24 verwendet. Zusätzlich befanden sich noch weniger als 18 Gew.% (auf Gesamtmasse Polymerelektrolyt bezogen) THF als Restlösungsmittel aus dem *Solution Casting* im Polymerelektrolyten. Das gemessene Polymerelektrolytmembranstück wies eine Schichtdicke von 440 µm und einen Durchmesser von 6 mm auf. In dem Diagramm sind zwei unterschiedliche Kurven dargestellt. Die obige Kurve (Sterne) stellt die Ergebnisse im Gleichgewicht bei konstanten Werten der Leitfähigkeit dar. Die untere Kurve (Quadrate) gibt das Ergebnis aus dem ersten Heizzyklus wieder. Man kann erkennen, dass zur Ausbildung einer reproduzierbaren, reversiblen Leitfähigkeit das System erst mindestens einmal auf 90 °C (oberhalb der Glasübergangstemperatur des Polystyrols) erhitzt werden muss, damit das System in ein thermodynamisches Gleichgewicht gebracht wird (vgl. diesbezüglich die vorherige Beschreibung zu Figuren 5 und 6). Ohne durch die Theorie gebunden zu sein scheinen sowohl die Ausbildung geordneter polymerer Strukturen zwischen den einzelnen BCPs, die Einlagerung von Li-Ionen in die polaren Bereiche und die Ausrichtung der Ionen-beladenen polaren Bereiche zu zusammenhängenden "Leitfähigkeitsdomänen" eine gewisse Aktivierungsenergie zu benötigen, welches durch ein mindestens einmaliges Erhitzen auf 90 °C erreicht werden kann. Man erkennt, dass im Gleichgewicht eine außergewöhnlich hohe und reproduzierbare ionische Gesamtleitfähigkeit, bei -20 °C und eine Leitfähigkeit im 10⁻³ S/cm-Bereich und bei 90 °C größer als 45 mS/cm erreicht wird. Darüber hinaus zeigt die ionische Gesamtleitfähigkeit über den gesamten Temperaturbereich eine konstante nahezu "Arrhenius-artige"/lineare und geringe Temperaturabhängigkeit. Diese hohe Leitfähigkeit bleibt auch nach intensiver Temperaturbehandlung, d. h. die Probe wurde in Summe mehrere Wochen immer zwischen -20 °C und 90 °C temperiert, erhalten. Diese Beobachtung zeigt überraschenderweise, dass das im Polymerelektrolyten zurückbleibende Restlösungsmittel fest in die "Struktur eingebaut" wird und sich nur in der PEO-Domäne befindet. Darüber hinaus zeigt diese thermische Langzeitstabilität, dass die Lithiumionen-Konzentration als auch die hochgeordnete lamellare Struktur durch das erfindungsgemäß hergestellte BCP stabilisiert wird.

Die Figur 11 zeigt die Ergebnisse für ein PI-PS-PEO Triblock-Copolymer mit einem Gesamtmolekulargewicht von 51,2 kg/mol (vgl. obige Tabelle für die Zusammensetzung der einzelnen Blöcke) für ein EO:Li-Verhältnis von 1:5,03, wobei LiTFSI als Leitsalz verwendet wurde. Zusätzlich befanden sich noch weniger als 20 Gew.% (auf die Gesamtmasse des Polymerelektrolyten bezogen) THF als Restlösungsmittel aus dem *Solution Casting* im Polymerelektrolyten. Das gemessene Polymerelektrolytmembranstück hatte eine Schichtdicke von 240 µm und einen Durchmesser von 6 mm. Die untere Kurve (Quadrate) zeigt die Ergebnisse des ersten Heizzyklus, während die oberen drei Kurven (Sterne, Kreise und Dreiecke) Ergebnisse unterschiedlicher Heizkurven nach Erreichen des Gleichgewichtszustandes darstellen. Man erkennt, dass im Gleichgewicht die ionische Gesamtleitfähigkeit bei ganz tiefen Temperaturen (-20 °C) im 10^{-2,5} S/cm-Bereich liegt und eine sehr geringe Temperaturabhängigkeit aufweist. Bei 90 °C liegt diese im 10^{-1,5} S/cm-Bereich. Im Vergleich zum ersten Heizzyklus wird einen Sprung von z. T. vier Dekaden erreicht. Es ist im hohen Maße ungewöhnlich, dass ein polymerbasierter Festelektrolyt bei -20 °C eine Lithiumionen-Leitfähigkeit von größer 1 mS/cm aufweist. Insbesondere erscheint die Leitfähigkeit bei -20 °C nach derzeitig üblicher Definition für den Einsatz als Elektrolyten in Alkaliionen-Sekundärbatterien im hohen Maße brauchbar. Normalerweise wird die Grenze der Lithiumionen-Leitfähigkeit von größer 1 mS/cm erst oberhalb von 30 °C erreicht.

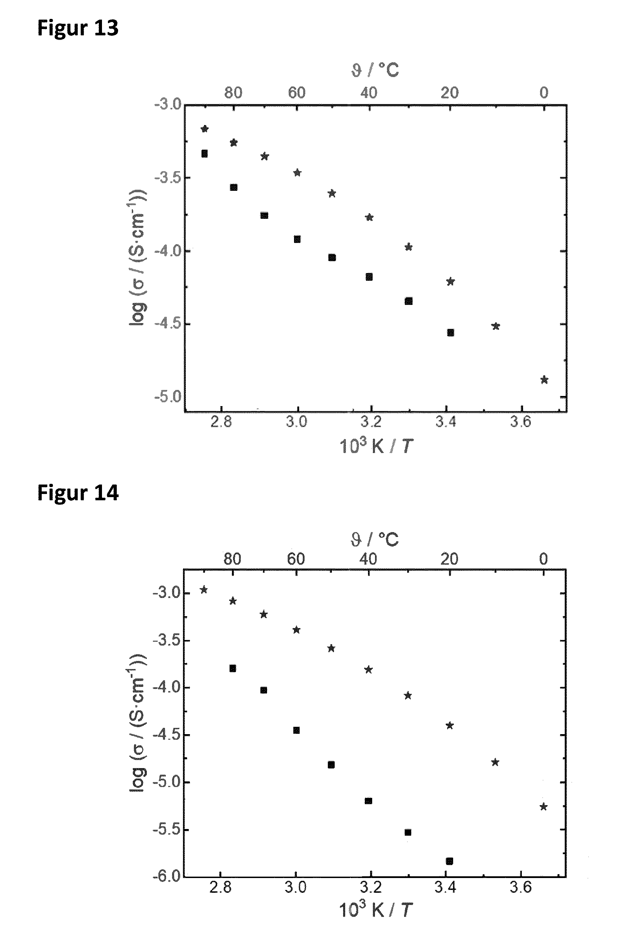

Die Figur 12 zeigt die Ergebnisse für ein PI-PS-PEO Triblock-Copolymer mit einem Gesamtmolekulargewicht von 107,5 kg/mol. Die Blockverteilung ist wie folgt M_{n, PI}= 31,2 kg/mol, M_{n, PS}= 74,4 kg/mol und M_{n, PEO}= 1,9 kg/mol und die Ergebnisse wurden mit einem EO:Li-Verhältnis von 1:9,75 erhalten. Es wurde LiTFSI als Leitsalz verwendet. Zusätzlich befanden sich noch weniger als 20 Gew.-% (auf Gesamtmasse Polymerelektrolyt bezogen) THF als Restlösungsmittel aus dem *Solution Casting* im Polymerelektrolyten. Das gemessene Polymerelektrolytmembranstück wies eine Schichtdicke von 420 µm und einen Durchmesser von 6 mm auf. Die untere Kurve (Quadrate) zeigt die Ergebnisse des ersten Heizzyklus, während die obere Kurve (Sterne) das Ergebnisse nach Erreichen des Gleichgewichtszustandes darstellt. Man erkennt, dass im Gleichgewicht bei -20 °C die Lithiumionen-Leitfähigkeit größer 1 mS/cm und die ionische Gesamtleitfähigkeit bei 90 °C größer 50 mS/cm beträgt (vgl. für weitere Deutung dieser Leitfähigkeiten die Beschreibung zu Figur 11). Darüber hinaus zeigt sich, dass die ionische Gesamtleitfähigkeit der Polymerelektrolyte durch die Verwendung der erfindungsgemäß hergestellten BCPs eine sehr geringe Temperaturabhängigkeit erhalten wird. Besonders bemerkenswert ist, dass sich die sehr hohen Lithiumionen-Leitfähigkeiten der Polymerelektrolyte aus Figur 11 und 12 kaum voneinander unterscheiden, obwohl das BCP aus Figur 12 im Vergleich zum BCP aus Figur 11 nur über die Hälfte leitender PEO-Domänen verfügt, da bei gleicher PEO-Kettenlänge von 1900 kg/mol das Gesamtmolekulargewicht des BCP aus Figur 12 mit 107,5 kg/mol in etwa doppelt so hoch ist, wie das Gesamtmolekulargewicht von 51,2 kg/mol aus Figur 11. Entscheidend für dieses überraschende Ergebnis ist, dass durch das erfindungsgemäße Verfahren eine sehr enge Definition des chemischen Designs des ionenleitenden Blocks garantiert ist und dadurch eine sonst nicht erreichbar hohe Lithiumionen-Konzentration in diesen sehr kurzen Blöcken untergebracht und stabilisiert werden kann. Es können sich hochgeordnete lamellare Strukturen unabhängig von der BCP-Zusammensetzung ausbilden (vgl. diesbezüglich auch Figur 13 und dessen Beschreibung).

Die Figur 13 zeigt die Ergebnisse für ein PI-PS-PEO Triblock-Copolymer mit einem Gesamtmolekulargewicht von 51,8 kg/mol mit einem EO:Li-Verhältnis von 1:4,99 und LiTFSI als Leitsalz. Die Zusammensetzung der Blöcke ist in obiger Tabelle angegeben. Zusätzlich befanden sich noch weniger als 30 Gew.% (auf Gesamtmasse Polymerelektrolyt bezogen) THF als Restlösungsmittel aus dem *Solution Casting* im Polymerelektrolyten. Das gemessene Polymerelektrolytmembranstück wies eine Schichtdicke von 360 µm und einen Durchmesser von 9 mm auf. Die untere Kurve (Quadrate) zeigt die Ergebnisse des ersten Heizzyklus, während die obere Kurve (Sterne) das Ergebnisse nach Erreichen des Gleichgewichtszustandes nach dem 4. Heizzyklus darstellt. Man erkennt, dass im Gleichgewicht die ionische Gesamtleitfähigkeit ein lineare Temperaturabhängigkeit aufweist. Der Leitfähigkeitssprung im gemessenen Temperaturbereich (von 0 °C bis 90 °C) zwischen dem ersten und vierten Heizzyklus ist weniger als eine halbe Dekade groß und ist damit im Vergleich zu den Leitfähigkeitssprüngen aus den Figuren 10 bis 12 deutlich geringer ausgeprägt. Das in diesem Polymerelektrolyten eingesetzte BCP wurde hinsichtlich besserer Prozessierung und Elektrodenkontaktierung optimiert, d. h. die Anteile bzw. die Kettenlängen der strukturgebenden unpolaren Blöcke (Polyisopren und Polystyrol) wurden variiert (vgl. obige Tabelle), wobei die Kettenlänge des polaren und ausschließlich für den Lithium-Ionentransport verantwortlichen PEO-Blocks mit 1,9 kg/mol gleich gelassen wurde. Durch die Erhöhung des Polyisoprenanteils und gleichzeitige Reduzierung des Polystyrolanteils konnten die mechanischen Eigenschaften des BCPs so gesteuert werden, dass dieses sehr flexibel geworden ist. Erstaunlicherweise ist trotz des sehr flexiblen BCPs die hochgeordnete Struktur und die damit verbundene gute ionische Gesamtleitfähigkeit des Polymerelektrolyten (über den gesamten Temperaturbereich hinweg oberhalb der des PEO-Standard-Referenzsystems) nicht verloren gegangen. Entscheidend für dieses erstaunliche Ergebnis ist, dass eine sehr enge Definition des chemischen Designs des ionenleitenden PEO-Blocks garantiert ist und dadurch eine sonst nicht erreichbar hohe Lithiumionen-Konzentration in diesen sehr kurzen Blöcken eingelagert und stabilisiert werden kann. Dadurch kann sich die hochgeordnete Struktur unabhängig von der BCP-Zusammensetzung ausbilden (vgl. diesbezüglich auch Figur 12 und deren Beschreibung).

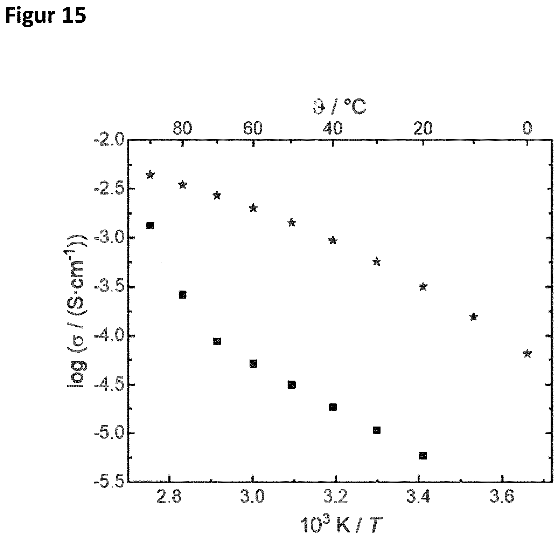

Die Figur 14 zeigt die Ergebnisse für ein PI-PS-PEO Triblock-Copolymer mit einem Gesamtmolekulargewicht von 107,5 kg/mol. Die Blockverteilung ist wie folgt M_{n, PI}= 31,2 kg/mol, M_{n, PS}= 74,4 kg/mol und M_{n, PEO}= 1,9 kg/mol und die Ergebnisse wurden mit einem EO:Li-Verhältnis von 1:2 erhalten. Als Leitsalz wurde LiTFSI verwendet. Zusätzlich befanden sich noch weniger als 13 Gew.% (auf Gesamtmasse Polymerelektrolyt bezogen) aus einem Gemisch aus MTBE und DMC als Restlösungsmittel aus dem *Solution Casting* im Polymerelektrolyten. Das gemessene Polymerelektrolytmembranstück wies eine Schichtdicke von 620 µm und einen Durchmesser von 9 mm auf. Die untere Kurve (Quadrate) zeigt die Ergebnisse des ersten Heizzyklus, während die obere Kurve (Sterne) das Ergebnisse nach Erreichen des Gleichgewichtszustandes darstellt. Man erkennt, dass im Gleichgewicht die ionische Gesamtleitfähigkeit ein lineare Temperaturabhängigkeit aufweist und über den gesamten Temperaturbereich hinweg oberhalb des PEO-Standard-Referenzsystems liegt. Diese hohe Leitfähigkeit bleibt auch nach intensiver Temperaturbehandlung, d. h. die Probe wurde in Summe mehrere Wochen zwischen 0 °C und 90 °C temperiert, erhalten. Diese Beobachtung zeigt überraschenderweise, dass eine geeignete Lösungsmittelauswahl nicht nur auf THF beschränkt ist. Es können flexibel andere Lösungsmittel bzw. Lösungsmittelgemische verwendet werden, ohne damit die gewünschten Ionentransporteigenschaften des Polymerelektrolyten zu verlieren. Entscheidend für dieses überraschendes Ergebnis ist, dass eine sehr enge Definition des chemischen Designs des ionenleitenden PEO-Blocks garantiert ist und dadurch eine sonst nicht erreichbar hohe Lithiumionen-Konzentration in diesen sehr kurzen Blöcken eingebracht und stabilisiert werden kann. Es ergeben sich hochgeordnete Strukturen, unabhängig von der BCP-Zusammensetzung und der Auswahl des Lösungsmittels bzw. Lösungsmittelgemisches. Die Lösungsmittelmoleküle werden anscheinend im Polymerelektrolyt "festgehalten". Beim Austausch des THFs durch ein anderes Lösungsmittel muss darauf geachtet werden, dass nicht nur das Leitsalz, sondern auch das gesamte BCP sich zunächst einmal komplett löst, damit das Leitsalz sich durch das langsame Lösungsmittelverdampfen des *solution casting* und das *self-assembly* im PEO-Block/Domäne einlagern und die leitfähigen Domänen sich ausrichten können. Bevorzugt kann dazu ein Gemisch aus mindestens zwei Lösungsmitteln verwendet werden. Als besonders vorteilhaft haben sich z.B. Kombinationen aus MTBE und DMC oder GBL oder PC herausgestellt. MTBE kann nur den unpolaren Teil und das DMC/GBL oder PC nur den polaren Teil des BCPs inklusive der verschiedenen Leitsalze gut löst. (vgl. diesbezüglich auch Figur 15 und deren Beschreibung).

Die Figur 15 zeigt die Ergebnisse für ein PI-PS-PEO Triblock-Copolymer mit einem Gesamtmolekulargewicht von 107,5 kg/mol. Die Blockverteilung ist wie folgt M_{n, PI}= 31,2 kg/mol, M_{n, PS}= 74,4 kg/mol und M_{n, PEO}= 1,9 kg/mol und die Ergebnisse wurden mit einem EO:Li-Verhältnis von 1:10,04 erhalten, wobei LiTFSI als Leitsalz verwendet wurde. Zusätzlich befanden sich noch weniger als 17 Gew.% (auf Gesamtmasse Polymerelektrolyt bezogen) aus dem Gemisch aus THF und PC als Restlösungsmittel aus dem *Solution Casting* im Polymerelektrolyten. Das gemessene Polymerelektrolytmembranstück wies eine Schichtdicke von 400 µm und einen Durchmesser von 10,5 mm auf. Die untere Kurve (Quadrate) zeigt die Ergebnisse des ersten Heizzyklus, während die obere Kurve (Sterne) das Ergebnisse nach Erreichen des Gleichgewichtszustandes darstellt. Man erkennt, dass im Gleichgewicht die ionische Gesamtleitfähigkeit neben der linearen Temperaturabhängigkeit auch über den gesamten Temperaturbereich hinweg deutlich oberhalb der des PEO-Standard-Referenzsystems liegt. Diese hohe Leitfähigkeit bleibt auch nach intensiver Temperaturbehandlung, d. h. die Probe wurde in Summe mehrere Wochen immer zwischen 0 °C und 90 °C temperiert, erhalten (vgl. für genauere Deutung dieser Leitfähigkeiten die Beschreibung zu Figur 15). Es wurden neben dem PC auch Polymerelektroylte mit GBL (hier nicht gezeigt) neben THF als zusätzliches Lösungsmittel-Additiv bzw. Co-Solvent hergestellt und vermessen. In sämtlichen Fällen, ist die Leitfähigkeit deutlich besser als die des PEO-Standard-Referenzsystems. Es ist daher zu erkennen, dass diese sehr gute ionische Gesamtleitfähigkeit nicht eine alleinige Funktion des THFs ist, sondern, wie bereits zuvor beschrieben, von der besonderen Struktur des BCP insbesondere des ionenleitenden PEO-Blocks und der hohen Leitsalz-Konzentration innerhalb dieser.

## Patentansprüche

1. Verfahren zur sequentiellen und konvergenten Herstellung geordneter Block-Copolymere mindestens aufweisend einen unpolaren und einem polaren Polymerblock, **dadurch gekennzeichnet, dass** der unpolare Block über eine lebende sequentielle anionische Polymerisation mittels eines Li-Organyl-Initiators mit einem pKa-Wert größer oder gleich 45 aus Monomeren ausgesucht aus der Gruppe bestehend aus konjugierten Dienen, Styrol, Vinylsilan, Vinylnaphthalin, Vinylmetallocen, deren Derivaten oder Mischungen daraus aufgebaut wird und der polare Block ein Polymerblock mit einem Molekulargewicht von größer oder gleich 350 g/mol und kleiner oder gleich 5000 g/mol und aus Monomeren ausgesucht aus der Gruppe bestehend aus C2-C10 Oxacycloverbindungen, deren Derivaten oder Mischungen mindestens zweier unterschiedlicher Monomere daraus ist, wobei der polare Polymerblock ein-schrittig über eine Epoxy-Funktionalisierung eines der Monomere des polaren Blocks, erhalten über eine Reaktion dieses Monomers mit Epichlorhydrin, in einem unpolaren Lösungsmittel ausgesucht aus der Gruppe der aromatischen Kohlenwasserstoffe oder Mischungen daraus in Gegenwart freier Li-Ionen konvergent kovalent an das unpolare Blockanion angebunden wird.

2. Verfahren nach Anspruch 1, wobei der polare Block ein Polyethylenoxidblock ist.

3. Verfahren nach einem der vorhergehenden Ansprüche, wobei der Li-Organyl-Initiator ein Alkylithium-Initiator mit einem pKa-Wert von größer oder gleich 50 ist.

4. Block-Copolymer erhalten nach einem Verfahren nach einem der Ansprüche 1 - 3, wobei der polare Block und das gesamte Block-Copolymer eine Polydispersität von größer oder gleich 1,0 und kleiner oder gleich 1,05 aufweisen, wobei die Polydispersität sich aus dem Verhältnis von Gewichts- zu Zahlenmittel des Molekulargewichts ergibt und das Molekulargewicht über GPC-Messungen und die in der Beschreibung definierten Bedingungen erhalten wird.

5. Block-Copolymer nach Anspruch 4, wobei das Block-Copolymer ein Molekulargewicht von größer oder gleich 20 kg/mol und kleiner oder gleich 250 kg/mol aufweist, wobei das Molekulargewicht nach der Beschreibung gemessen wird.

6. Block-Copolymer nach einem der Ansprüche 4 - 5, wobei der polare Polymerblock ein Polyethylenoxidblock ist, wobei der Polyethylenoxidblock ein Molekulargewicht von größer oder gleich 450 g/mol und kleiner oder gleich 3000 g/mol aufweist.

7. Block-Copolymer nach einem der Ansprüche 4 - 6, wobei der unpolare Polymerblock ein Polyisopren-Polystyrol-Diblockpolymer und polare Polymerblock ein Polyethylenoxidblock ist, wobei das Gewichtsverhältnis vom polaren zu unpolaren Blockpolymeranteilen, ausgedrückt als Gewicht polarer Block dividiert durch Gewicht gesamtes Blockpolymer, größer oder gleich 0,5 % und kleiner oder gleich 10 % beträgt.

8. Verwendung eines Block-Copolymers nach einem der Ansprüche 4-7 zum Einsatz als Polymerelektrolyt in Alkali-Ionenbatterien.

9. Verwendung nach Anspruch 8, wobei das EO/Alkaliionen-Verhältnis im Polymerelektrolyt der Alkali-Ionenbatterie größer oder gleich 1:1 und kleiner oder gleich 1:20 beträgt.

10. Polymerelektrolyt für eine Alkali-Ionenbatterie, **dadurch gekennzeichnet, dass** die polymeren Bestandteile des Polymerelektrolyten, Block-Copolymere nach einem der Ansprüche 4-7 umfassen.

11. Polymerelektrolyt nach Anspruch 10, wobei die polymeren Bestandteile des Polymerelektrolyten aus Block-Copolymeren nach Anspruch 10 bestehen.

12. Polymerelektrolyt nach einem der Ansprüche 10 oder 11, wobei der Polymerelektrolyt bei -20°C eine ionische Leitfähigkeit von größer oder gleich 1 mS/cm aufweist, wobei die ionische Leitfähigkeit nach der Beschreibung gemessen wird.

13. Polymerelektrolyt nach einem der Ansprüche 10 bis 11, wobei der Polymerelektrolyt in einem Temperaturbereich von größer oder gleich -20°C und kleiner oder gleich 90°C eine ionische Leitfähigkeit von größer oder gleich 1 mS/cm aufweist, wobei die ionische Leitfähigkeit nach der Beschreibung gemessen wird.

14. Polymerelektrolyt nach einem der Ansprüche 10 - 13, wobei der Polymerelektrolyt ein Restlösemittelgehalt von größer oder gleich 0,1 Gew.-% und kleiner oder gleich 30 Gew.-% aufweist.

## Claims

1. Process for the sequential and convergent preparation of ordered block copolymers comprising at least one non-polar and one polar polymer block, **characterized in that** the non-polar block is built up via a living sequential anionic polymerization by means of a Li-organyl initiator having a pKa greater than or equal to 45 from monomers selected from the group consisting of conjugated dienes, styrene, vinylsilane, vinylnaphthalene, vinylmetallocene, their derivatives or mixtures thereof and the polar block is a polymer block having a molecular weight greater than or equal to 350 g/mol and less than or equal to 5000 g/mol and being composed of monomers selected from the group consisting of C2-C10 oxacyclo compounds, their derivatives or mixtures of at least two different monomers thereof, wherein the polar polymer block being covalently linked in a convergent manner to the non-polar block anion via an epoxy functionalization of one of the monomers of the polar block, obtained via a reaction of this monomer with epichlorohydrin, in a non-polar solvent selected from the group of aromatic hydrocarbons or mixtures thereof in the presence of free Li ions.

2. Process according to claim 1, wherein the polar block is a polyethylene oxide block.

3. Process according to any one of the preceding claims, wherein the Li-organyl initiator is an alkylithium initiator having a pKa greater than or equal to 50.

4. Block copolymer obtained by a process according to any one of claims 1 - 3, wherein the polar block and the whole block copolymer have a polydispersity of greater than or equal to 1.0 and less than or equal to 1.05, wherein the polydispersity is calculated via the ratio of a weight mean to a number mean of the molecular weight and the molecular weight is obtained via GPC measurements according to the conditions defined in the description.

5. Block copolymer according to claim 4 5, wherein the block copolymer has a molecular weight of greater than or equal to 20 kg/mol and less than or equal to 250 kg/mol, and the molecular weight is measured according to the description.

6. Block copolymer according to any one of claims 4-5, wherein the polar polymer block is a polyethylene oxide block, wherein the polyethylene oxide block has a molecular weight greater than or equal to 450 g/mol and less than or equal to 3000 g/mol.

7. Block copolymer according to any one of claims 4-6, wherein the non-polar polymer block is a polyisoprene-polystyrene diblock polymer and polar polymer block is a polyethylene oxide block, wherein the weight ratio of polar to non-polar block polymer fractions, expressed as weight polar block divided by weight total block polymer, is greater than or equal to 0.5% and less than or equal to 10%.

8. Use of a block copolymer according to any one of claims 4 - 7 for use as polymer electrolyte in alkali ion batteries.

9. Use according to claim 8, wherein the EO/alkali ion ratio in the polymer electrolyte of the alkaline ion battery is greater than or equal to 1:1 and less than or equal to 1:20.

10. Polymer electrolyte for an alkali ion battery, **characterized in that** the polymer components of the polymer electrolyte comprise the block copolymers according to any one of claims 4 - 7.

11. Polymer electrolyte according to claim 10, wherein the polymer components of the polymer electrolyte consist of block copolymers according to claim 10.

12. Polymer electrolyte according to any one of claims 10 or 11, wherein the polymer electrolyte has an ionic conductivity at -20°C of greater than or equal to 1 mS/cm, wherein the ionic conductivity is measured according to the description.

13. Polymer electrolyte according to any one of claims 10 to 12, wherein the polymer electrolyte has an ionic conductivity of greater than or equal to 1 mS/cm in a temperature range of greater than or equal to -20°C and less than or equal to 90°C, wherein the ionic conductivity is measured according to the description.

14. Polymer electrolyte according to any one of claims 10 - 13, wherein the polymer electrolyte has a residual solvent content of greater than or equal to 0.1 wt% and less than or equal to 30 wt%.

## Revendications

1. Procédé de production séquentielle et convergente de copolymères à blocs ordonnés comprenant au moins un bloc polymère non polaire et un bloc polymère polaire, **caractérisé en ce que** le bloc non polaire est construit par polymérisation anionique séquentielle vivante à l'aide d'un initiateur Li-organyl avec un pKa supérieur ou égal à 45 à partir de monomères choisis dans le groupe composé par les diènes conjugués, le styrène, le vinylesilane, le vinylnaphtalène, le vinylmétallocène, leurs dérivés ou leurs mélanges, et le bloc polaire est un bloc polymère ayant un poids moléculaire supérieur ou égal à 350 g/mol et inférieur ou égal à 5000 g/mol et est composé de monomères choisis parmi les composés oxacyclo en C2-C10, leurs dérivés ou des mélanges d'au moins deux monomères différents de ceux-ci, dans lequel le bloc polymère polaire est obtenu en une seule étape par une fonctionnalisation époxy de l'un des monomères du bloc polaire, par une réaction de ce monomère avec l'épichlorhydrine, dans un solvant non polaire choisi parmi le groupe des hydrocarbures aromatiques ou leurs mélanges en présence d'ions de litium libres, étant lié de manière convergente et covalente à l'anion de bloc non polaire.

2. Procédé selon la revendication 1, dans lequel le bloc polaire est un bloc d'oxyde de polyéthylène.

3. Procédé selon l'une quelconque des revendications précédentes, dans lequel l'initiateur Li-organyl est un initiateur alkyllithium ayant une valeur pKa égale ou supérieure à 50.

4. Copolymère à blocs obtenu par un procédé selon l'une des revendications 1 à 3, dans lequel le bloc polaire et l'ensemble du copolymère à bloc présentent une polydispersité supérieure ou égale à 1,0 et inférieure ou égale à 1,05, dans lequel la polydispersité étant déterminée par le rapport de la moyenne pondérale à la moyenne numérique du poids moléculaire et le poids moléculaire est obtenu via des mesures GPC et dans des conditions définies dans la description.

5. Copolymère à blocs selon la revendication 4, dans lequel le copolymère à blocs présente un poids moléculaire supérieur ou égal à 20 kg/mol et inférieur ou égal à 250 kg/mol et le poids moléculaire est mesuré selon la description.

6. Copolymère à blocs selon l'une des revendications 4 à 5, dans lequel le bloc polymère polaire est un bloc d'oxyde de polyéthylène, dans lequel le bloc d'oxyde de polyéthylène présente un poids moléculaire supérieur ou égal à 450 g/mol et inférieur ou égal à 3000 g/mol.

7. Copolymère à blocs selon l'une des revendications 4 à 6, dans lequel le bloc polymère non polaire est un polymère dibloc polyisoprène-polystyrène et le bloc polymère polaire est un bloc d'oxyde de polyéthylène, dans lequel le rapport pondéral des fractions de polymère à blocs polaires et non polaires, exprimé en poids du bloc polaire divisé par le poids total du polymère à blocs, est supérieur ou égal à 0,5 % et inférieur ou égal à 10 %.

8. Utilisation d'un copolymère à blocs selon l'une des revendications 4 à 7 pour une utilisation comme électrolyte polymère dans les batteries à ions alcalins.

9. Utilisation selon la revendication 8, dans laquelle le rapport EO/ions alcalins dans l'électrolyte polymère de la batterie à ions alcalins est supérieur ou égal à 1:1 et inférieur ou égal à 1:20.

10. Électrolyte polymère pour batterie à ions alcalins, **caractérisé en ce que** les composants polymères de l'électrolyte polymère comprennent des copolymères à blocs selon l'une des revendications 4 à 7.

11. Électrolyte polymère selon la revendication 10, dans lequel les composants polymères de l'électrolyte polymère sont constitués de copolymères à blocs selon la revendication 10.

12. Électrolyte polymère selon l'une des revendications 10 ou 11, dans lequel l'électrolyte polymère a une conductivité ionique supérieure ou égale à 1 mS/cm à -20°C, dans laquelle la conductivité ionique est mesurée selon la description.

13. Électrolyte polymère selon l'une des revendications 10 à 11, dans laquelle l'électrolyte polymère a une conductivité ionique supérieure ou égale à 1 mS/cm dans une plage de température supérieure ou égale à -20°C et inférieure ou égale à 90°C, dans laquelle la conductivité ionique est mesurée selon la description.

14. Électrolyte polymère selon l'une des revendications 10 à 13, dans laquelle l'électrolyte polymère a une teneur en solvant résiduel supérieure ou égale à 0,1 % en poids et inférieure ou égale à 30 % en poids.
